# EUROPEAN PATENT APPLICATION

(11) **EP 4 838 591 A1**
(43) Date of publication of application: **11.11.2026**
(21) Application number: 25807587.8
(22) Date of filing: 08.05.2025
(51) Int. Cl.: H01M 8/0247, H01M 8/0206, H01M 8/0267

(54) **BIPOLAR PLATE AND METHOD FOR PRODUCING SAME**

(30) Priority: 23.05.2024 JP 2024084018
(71) Applicant: Sumitomo Riko Company Limited, Komaki-shi, Aichi 485-8550 (JP)
(72) Inventor: KADONO Hideya, Komaki-shi, Aichi 485-8550 (JP)
(74) Representative: Becker, Eberhard
(86) International application number: PCT/JP2025/016877
(87) International publication number: WO 2025/243855

(57) **Abstract**

The present invention addresses the problem of facilitating joining work between a first separator (2A) and a second separator (2B). A bipolar plate (1) is characterized by comprising: a first separator (2A); a second separator (2B) that is laminated on the first separator (2A); and joining parts (30-32) that are composed of an elastomer and join surfaces which do not face each other among given surfaces of the first separator (2A) and given surfaces of the second separator (2B).

## Description

### Technical Field

The present disclosure relates to a bipolar plate for a fuel cell and a method for producing the same.

### Related Art

A pair of separators of a fuel cell described in Patent Document 1 are joined and stacked by welding. A pair of separators of a fuel cell described in Patent Document 2 are joined and stacked by an adhesive.

### Related Art Documents

### Patent Documents

Patent Document 1: International Patent Publication No. 2018/034085
Patent Document 2: Japanese Patent Application Laid-Open No. 2007-35442

### SUMMARY

### Technical Problem

In the case of joining a pair of separators by welding or adhesion, the pair of separators are pressed against each other from the stacking direction. During pressing, the pressing accuracy of the pair of separators (such as the contact area and pressing load of the pair of separators) needs to be managed precisely. Thus, the joining work is complicated. Accordingly, an objective of a bipolar plate and a method for producing the same of the present disclosure is to facilitate a joining work between a pair of separators.

### Solution to Problem

(1) To solve the above-mentioned problem, a bipolar plate of the present disclosure includes: a first separator; a second separator stacked on the first separator; and a connecting portion made of an elastomer and connecting, among any surface of the first separator and any surface of the second separator, surfaces that are not opposed to each other.

According to such a configuration, the connecting portion connects surfaces, among any surface of the first separator and any surface of the second separator, that are not opposed to each other. Therefore, the management burden for pressing accuracy between the first separator and the second separator can be reduced. Accordingly, the joining work between the first separator and the second separator is facilitated.

The connecting portion made of an elastomer has elasticity. Therefore, even in the case where spring back occurs in the first separator or the second separator during joining, at least a part of the spring back can be absorbed by elastic deformation of the connecting portion.

(1-1) In the configuration of (1) above, taking a direction in which the first separator and the second separator are stacked as a stacking direction, the first separator may have a first opposing surface opposed to the second separator in the stacking direction and a first non-opposing surface not opposed to the second separator in the stacking direction. The second separator may have a second opposing surface opposed to the first separator in the stacking direction and a second non-opposing surface not opposed to the first separator in the stacking direction. The connecting portion may connect surfaces of at least one combination among the following combinations (A) to (C): (A) the first non-opposing surface and the second non-opposing surface; (B) the first opposing surface and the second non-opposing surface; and (C) the first non-opposing surface and the second opposing surface.

According to such a configuration, the connecting portion connects surfaces of at least one combination among the combinations (A) to (C) above, that is, surfaces of combinations other than "the first opposing surface and the second opposing surface." Therefore, the management burden for pressing accuracy between the first separator and the second separator can be reduced. Accordingly, the joining work between the first separator and the second separator is facilitated.

(2) In any of the configurations above, taking a direction in which the first separator and the second separator are stacked as a stacking direction, the first separator may have a first through hole extending through the first separator in the stacking direction. The second separator may have a second through hole extending through the second separator in the stacking direction. As viewed from the stacking direction, the first through hole and the second through hole may overlap with each other entirely or partially. The connecting portion may be disposed straddling the first through hole and the second through hole. The first separator and the second separator may be integrated via the connecting portion. According to such a configuration, the first separator and the second separator can be integrated by utilizing a hole interior space of the first through hole and a hole interior space of the second through hole.

(3) In the configuration of (2) above, as viewed from the stacking direction, the first through hole may have a first overlapping portion that overlaps with the second through hole, and a first non-overlapping portion that does not overlap with the second through hole. As viewed from the stacking direction, the second through hole may have a second overlapping portion that overlaps with the first through hole, and a second non-overlapping portion that does not overlap with the first through hole. The first non-overlapping portion and the second non-overlapping portion may extend in directions that differ from each other.

Herein, "directions that differ from each other" include any X direction (for example, a front-rear direction) and a Y direction (for example, a left-right direction) intersecting the X direction. In addition, "directions that differ from each other" include an X+ direction (forward direction) and an X- direction (rearward direction) within the same X direction (for example, the front-rear direction). The same applies to the Y direction. According to such a configuration, the first non-overlapping portion and the second non-overlapping portion can extend in directions that differ from each other, starting from the first overlapping portion and the second overlapping portion. Therefore, the connecting portion can be extended along the first non-overlapping portion and the second non-overlapping portion in directions intersecting the stacking direction.

(4) In the configuration of (3) above, the first through hole may have multiple first overlapping portions. Multiple second through holes may be provided. The multiple first overlapping portions may each communicate with a different one of the second through holes. The connecting portion may be disposed via the first through hole and the multiple second through holes.

According to such a configuration, one first through hole can communicate with multiple second through holes. Therefore, the connecting portion can be disposed to pass via such through holes (the first through hole and the second through holes). Accordingly, the first separator and the second separator can be joined as if being stitched together.

(5) In the configuration of (3) above, the second through hole may have multiple second overlapping portions. Multiple first through holes may be provided. The multiple second overlapping portions may each communicate with a different one of the first through holes. The connecting portion may be disposed via the second through hole and the multiple first through holes.

According to such a configuration, one second through hole can communicate with multiple first through holes. Therefore, the connecting portion can be disposed to pass via such through holes (the first through holes and the second through hole). Accordingly, the first separator and the second separator can be joined as if being stitched together.

(6) In any of the configurations above, the connecting portion may fill at least one of the first through hole and the second through hole. According to such a configuration, a volume of material of the connecting portion can be increased compared to the case where the connecting portion does not fill the first through hole and the second through hole. In addition, the connecting portion is joined over an entirety of the inner circumferential surface of the filled through hole (a through hole that is at least one of the first through hole and the second through hole and is filled by the connecting portion). Accordingly, the first separator and the second separator can be firmly joined together.

(7) In any of the configurations above, the first separator may have a first opposing surface opposed to the second separator in the stacking direction, and a first non-opposing surface not opposed to the second separator in the stacking direction. The second separator may have a second opposing surface opposed to the first separator in the stacking direction, and a second non-opposing surface not opposed to the first separator in the stacking direction. An inner circumferential surface of the first through hole may be included in the first non-opposing surface. The connecting portion accommodated in the first through hole may connect the inner circumferential surface of the first through hole and the second opposing surface. According to such a configuration, the inner circumferential surface of the first through hole (the first non-opposing surface) and the second opposing surface can be connected via the connecting portion.

(8) In any of the configurations above, the first separator may have a first opposing surface opposed to the second separator in the stacking direction, and a first non-opposing surface not opposed to the second separator in the stacking direction. The second separator may have a second opposing surface opposed to the first separator in the stacking direction, and a second non-opposing surface not opposed to the first separator in the stacking direction. An inner circumferential surface of the second through hole may be included in the second non-opposing surface. The connecting portion accommodated in the second through hole may connect the inner circumferential surface of the second through hole and the first opposing surface. According to such a configuration, the inner circumferential surface of the second through hole (the second non-opposing surface) and the first opposing surface can be connected via the connecting portion.

(9) In any of the configurations above, the first through hole and the second through hole may connect to each other without a gap in the stacking direction. According to such a configuration, a thickness of the bipolar plate in the stacking direction can be reduced compared to the case where a gap is present between the first through hole and the second through hole (specifically, the case where the material of the connecting portion is interposed between the first separator and the second separator).

(10) In any of the configurations above, taking a direction in which the first separator and the second separator are stacked as a stacking direction, a cooling flow path through which a coolant flows may be defined between the first separator and the second separator. As viewed from the stacking direction, the connecting portion may be in an endless annular shape surrounding the cooling flow path.

According to such a configuration, the first separator and the second separator can be joined via the connecting portion. In addition, the cooling flow path can be sealed by the endless annular connecting portion. That is, the joining work between the first separator and the second separator and the sealing work of the cooling flow path can be performed in parallel. Therefore, the production time of the bipolar plate can be shortened and the number of production steps can be reduced compared to the case where the joining work and the sealing work are performed separately.

(11) In any of the configurations above, taking a direction in which the first separator and the second separator are stacked as a stacking direction, a cooling flow path through which a coolant flows may be defined between the first separator and the second separator. The first separator may have a first cooling surface that is a surface on a cooling flow path side, and a first gas surface facing away from the first cooling surface. The second separator may have a second cooling surface that is a surface on the cooling flow path side, and a second gas surface facing away from the second cooling surface. The bipolar plate may further include a gasket that protrudes toward a stacking direction outer side from at least one of the first gas surface and the second gas surface and connects integrally to the connecting portion.

According to such a configuration, the first separator and the second separator can be joined via the connecting portion. In addition, the gasket can be fabricated from the connecting portion. That is, the joining work between the first separator and the second separator and the fabrication work of the gasket can be performed in parallel. Therefore, the production time of the bipolar plate can be shortened and the number of production steps can be reduced compared to the case where the joining work and the fabrication work are performed separately.

(12) In any of the configurations of (1) to (10) above, taking a direction in which the first separator and the second separator are stacked as a stacking direction, a cooling flow path through which a coolant flows may be defined between the first separator and the second separator. The first separator may have a first cooling surface that is a surface on a cooling flow path side, and a first gas surface facing away from the first cooling surface. The second separator may have a second cooling surface that is a surface on the cooling flow path side, and a second gas surface facing away from the second cooling surface. The bipolar plate may further include a gasket that protrudes toward a stacking direction outer side from at least one of the first gas surface and the second gas surface and is formed separately from the connecting portion.

According to such a configuration, the connecting portion and the gasket are formed separately. Therefore, a degree of design freedom (freedom in selecting the shape, size, material, etc.) of the connecting portion and the gasket can be increased compared to the case where the connecting portion and the gasket connect integrally.

(13) In the configuration of (11) or (12) above, a power generating portion of a fuel cell may be disposed on both outer sides of the first separator and the second separator in the stacking direction. The gasket may protrude from the first gas surface and the second gas surface toward the both outer sides in the stacking direction. A first gas flow path through which one of a hydrogen-containing gas and an oxygen-containing gas flows may be defined between the first separator and the power generating portion. A second gas flow path through which the other of the hydrogen-containing gas and the oxygen-containing gas flows may be defined between the second separator and the power generating portion. As viewed from the stacking direction, the gasket may be in an endless annular shape surrounding the first gas flow path and the second gas flow path.

According to such a configuration, the first gas flow path can be sealed by the gasket on the first gas surface side (the first separator side). In addition, the second gas flow path can be sealed by the gasket on the second gas surface side (the second separator side).

(14) In the configuration of (13) above, taking a direction orthogonal to an extending direction of the gasket on the first gas surface and the second gas surface as a short direction, the gasket may have a short direction width greater than a short direction width of the connecting portion.

According to such a configuration, the gasket has a short direction width greater than that of the connecting portion. Therefore, leakage of the gas (the hydrogen-containing gas and the oxygen-containing gas) from the flow paths (the first gas flow path and the second gas flow path) to outside across the gasket can be suppressed.

(15) To solve the above-mentioned problem, a method for producing a bipolar plate of the present disclosure is a method for producing the bipolar plate according to the configuration of (2) above. The method includes: disposing the first separator and the second separator into a molding mold such that, as viewed from the stacking direction, the first through hole and the second through hole overlap with each other entirely or partially; and injecting a raw material of the connecting portion into the molding mold and curing the raw material to mold the connecting portion and integrate the first separator and the second separator via the connecting portion.

According to such a configuration, the connecting portion is molded in the hole interior space of the first through hole and the hole interior space of the second through hole. The first separator and the second separator can be integrated by the connecting portion.

(16) In the configuration of (15) above, the bipolar plate may include a gasket that connects integrally with the connecting portion. The raw material may be a raw material of the connecting portion and the gasket. The molding mold may include a gasket molding cavity for molding the gasket. In a mold-clamped state, the gasket molding cavity may communicate with the first through hole and the second through hole. The method may further include: injecting the raw material into the molding mold and curing the raw material to mold the gasket together with the connecting portion.

According to such a configuration, the joining work between the first separator and the second separator and the fabrication work of the gasket can be performed in parallel. Therefore, the production time of the bipolar plate can be shortened and the number of production steps can be reduced compared to the case where the joining work and the fabrication work are performed separately.

### Effects

According to the bipolar plate and the method for producing the same of the present disclosure, the joining work between a pair of separators can be facilitated.

### BRIEF DESCRIPTION OF THE DRAWINGS

[FIG. 1] FIG. 1 is a partial cross-sectional view in a vertical direction of a stack of a fuel cell including a bipolar plate of a first embodiment.
[FIG. 2] FIG. 2 is a top view of the bipolar plate.
[FIG. 3] FIG. 3 is a bottom view of a first separator of the bipolar plate.
[FIG. 4] FIG. 4 is a top view of a second separator of the bipolar plate.
[FIG. 5] FIG. 5 is a bottom view of the bipolar plate.
[FIG. 6] FIG. 6 is a top view of the first separator alone.
[FIG. 7] FIG. 7 is a top view of the second separator alone.
[FIG. 8] FIG. 8 is an exploded perspective view of the first separator and the second separator connected via a slit connecting portion.
[FIG. 9] FIG. 9 is an exploded perspective view of the first separator and the second separator connected via spot hole connecting portions.
[FIG. 10] FIG. 10 is an exploded perspective view of the first separator and the second separator connected via manifold connecting portions.
[FIG. 11] FIG. 11 is an enlarged view of a frame XI in FIG. 2.
[FIG. 12] FIG. 12 is a cross-sectional view taken along a line XII-XII in FIG. 11.
[FIG. 13] FIG. 13 is an enlarged view of a frame XIII in FIG. 2.
[FIG. 14] FIG. 14 is a cross-sectional view taken along a line XIV-XIV in FIG. 13.
[FIG. 15] FIG. 15 is an enlarged view of a frame XV in FIG. 2.
[FIG. 16] FIG. 16 is a cross-sectional view taken along a line XVI-XVI in FIG. 15.
[FIG. 17] FIG. 17 is a partial cross-sectional view in the vertical direction of a mold in a mold-open state used for producing the bipolar plate.
[FIG. 18] FIG. 18 is a partial cross-sectional view in the vertical direction of the mold in a mold-clamped state (at the beginning of an injection process).
[FIG. 19] FIG. 19 is a partial cross-sectional view in the vertical direction of the mold in the mold-clamped state (at the end of a vulcanization process).
[FIG. 20] FIG. 20 is a partial cross-sectional view in the vertical direction of a bipolar plate of a second embodiment.
[FIG. 21] FIG. 21 is a partial cross-sectional view in the vertical direction of a bipolar plate of a third embodiment.

### DESCRIPTION OF THE EMBODIMENTS

Hereinafter, embodiments of a bipolar plate and implementation of a method for producing the same of the disclosure will be described.

### <First Embodiment>

### [Arrangement of Bipolar Plate]

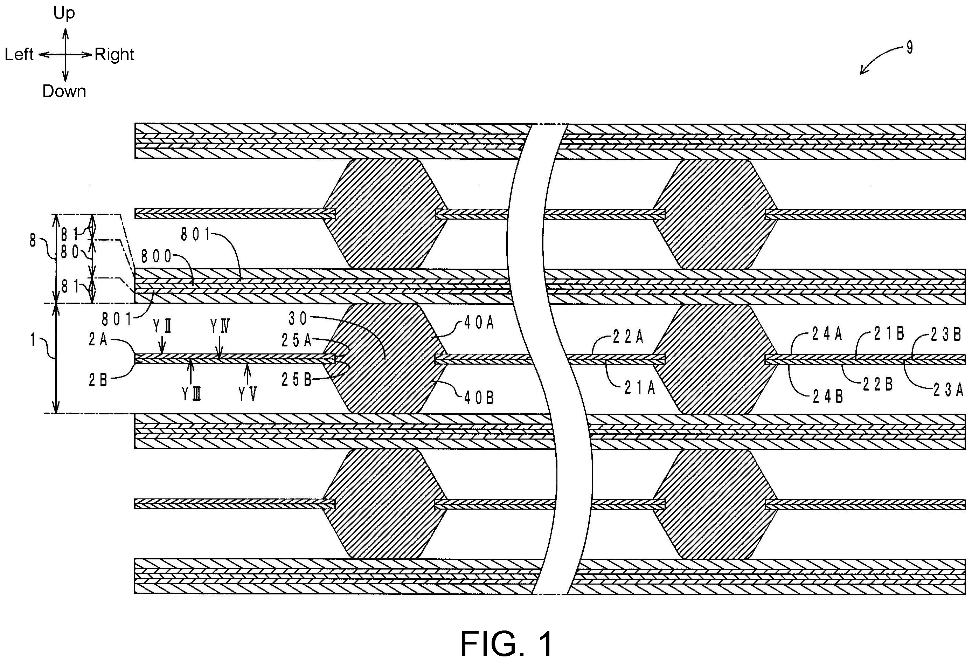

First, an arrangement of the bipolar plate of the present embodiment will be described. In the following figures, a vertical direction corresponds to a "stacking direction" of the disclosure. FIG. 1 shows a partial cross-sectional view in the vertical direction of a stack of a fuel cell including the bipolar plate of the present embodiment. As shown in FIG. 1, in a stack 9, multiple bipolar plates 1 and multiple power generating portions 8 are alternately stacked in the vertical direction (stacking direction).

Focusing on one bipolar plate 1, a pair of power generating portions 8 are stacked on both sides of the bipolar plate 1 in the vertical direction. The power generating portion 8 includes a membrane electrode assembly 80 and a pair of gas diffusion layers 81. The membrane electrode assembly 80 includes an electrolyte membrane 800 and a pair of electrodes 801. The pair of electrodes 801 are stacked on both sides of the electrolyte membrane 800 in the vertical direction. The lower (one side in the stacking direction) electrode 801 is an anode (fuel electrode). The upper (other side in the stacking direction) electrode 801 is a cathode (air electrode). The pair of gas diffusion layers 81 are stacked on both sides of the pair of electrodes 801 in the vertical direction.

### [Configuration of Bipolar Plate]

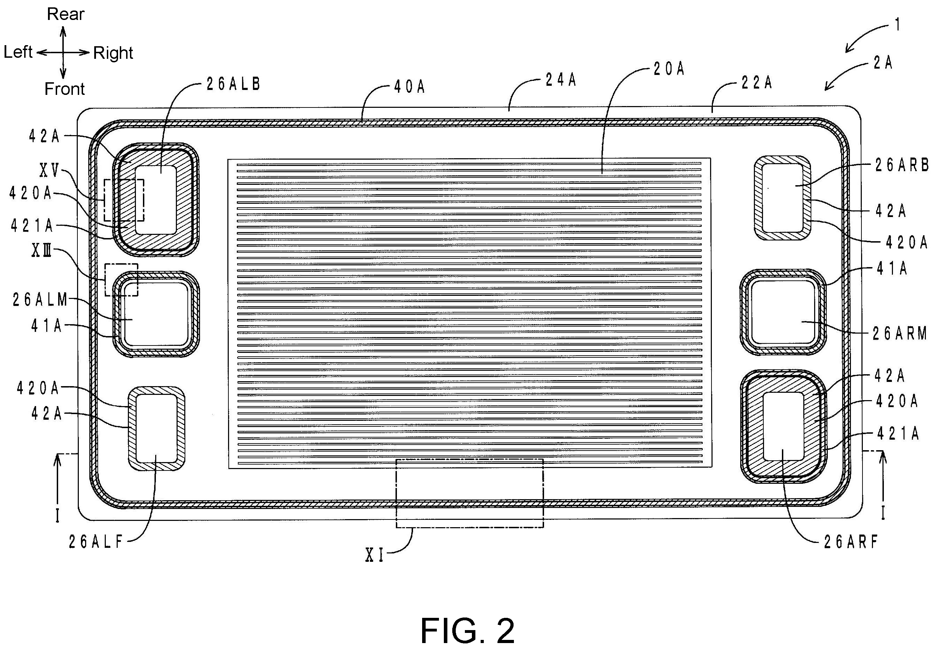

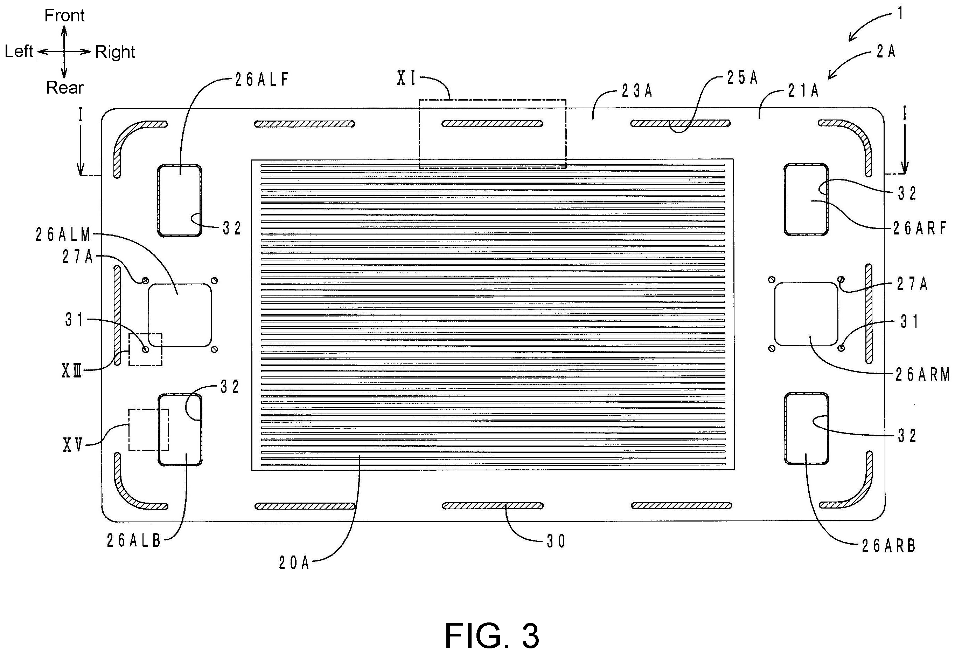

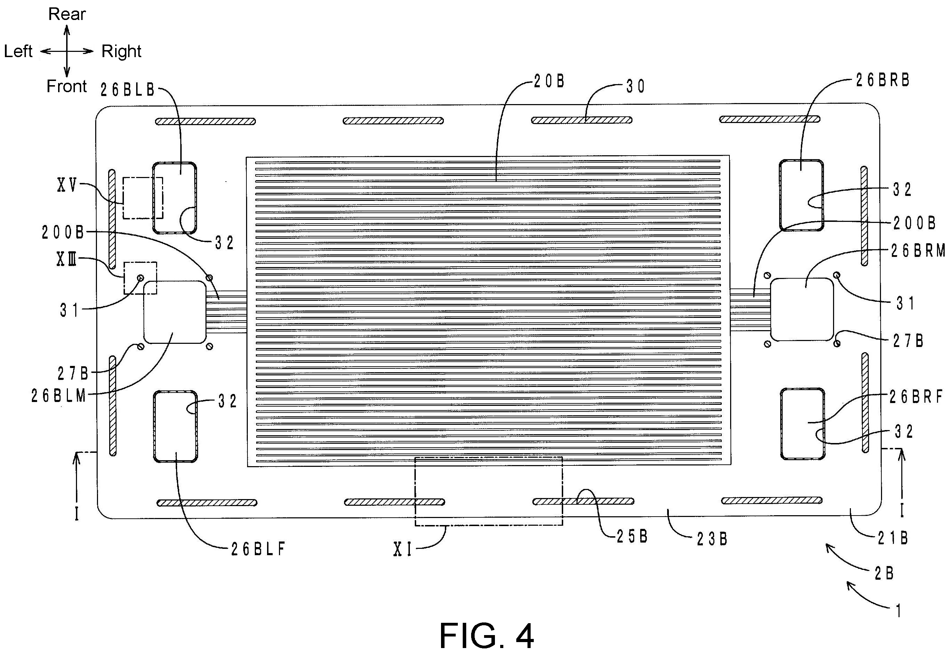

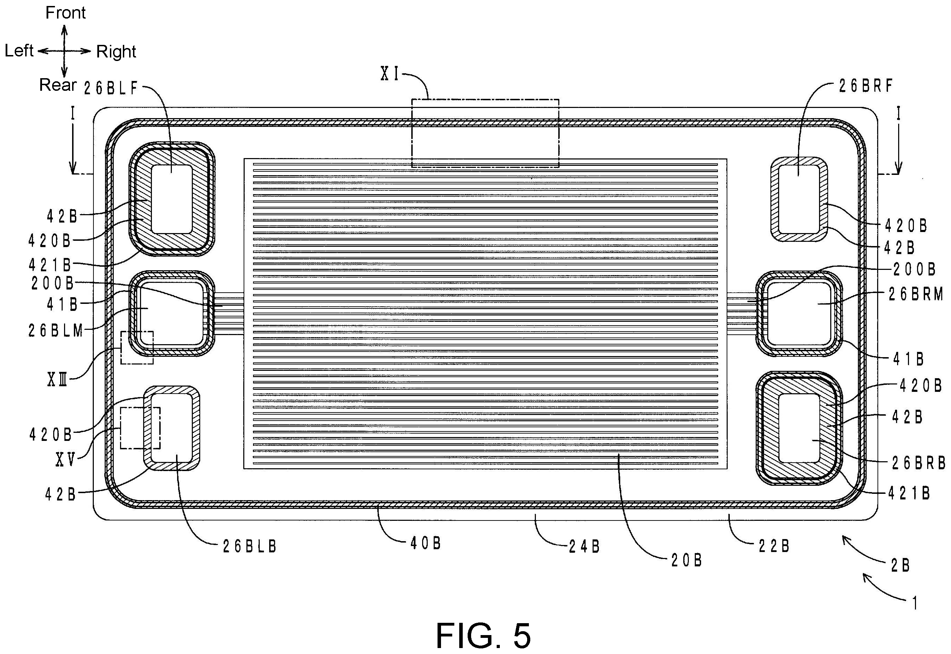

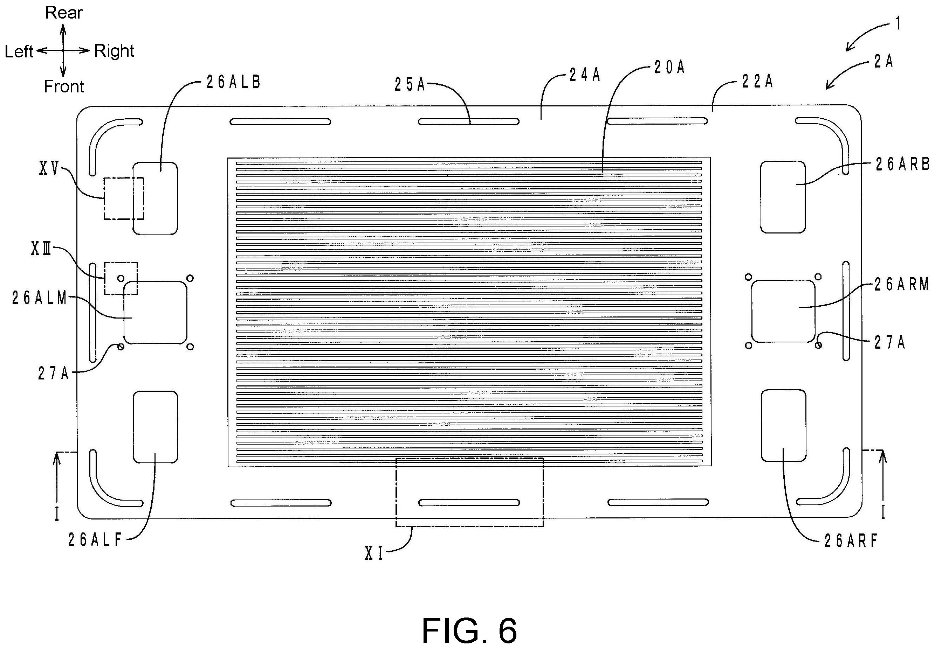

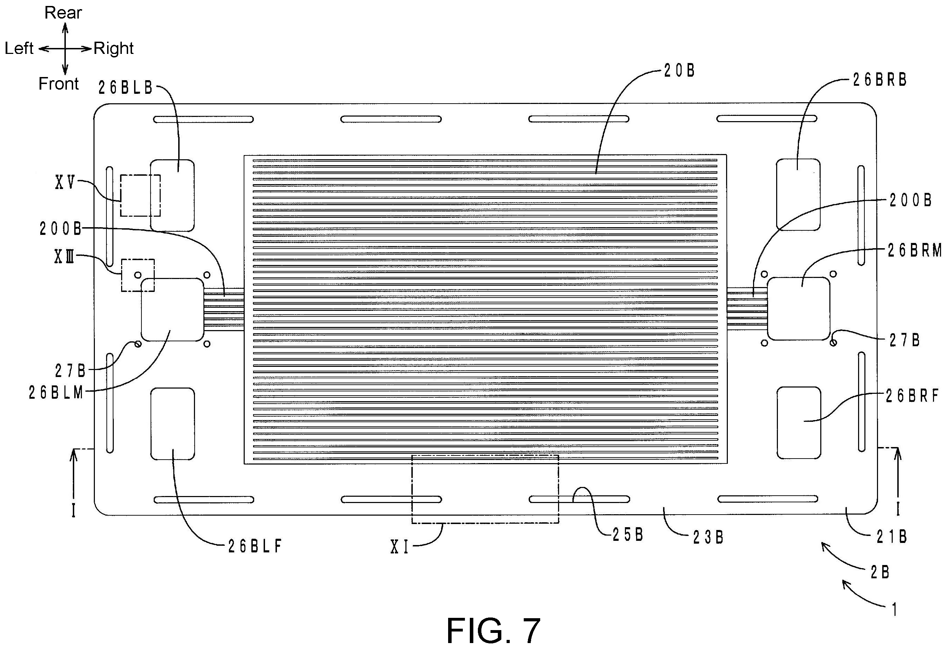

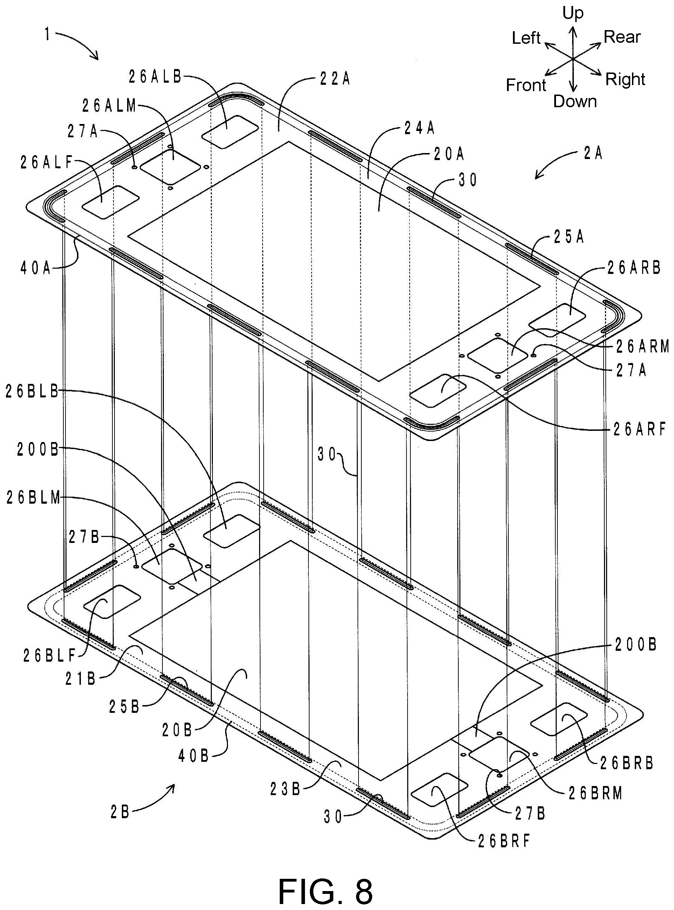

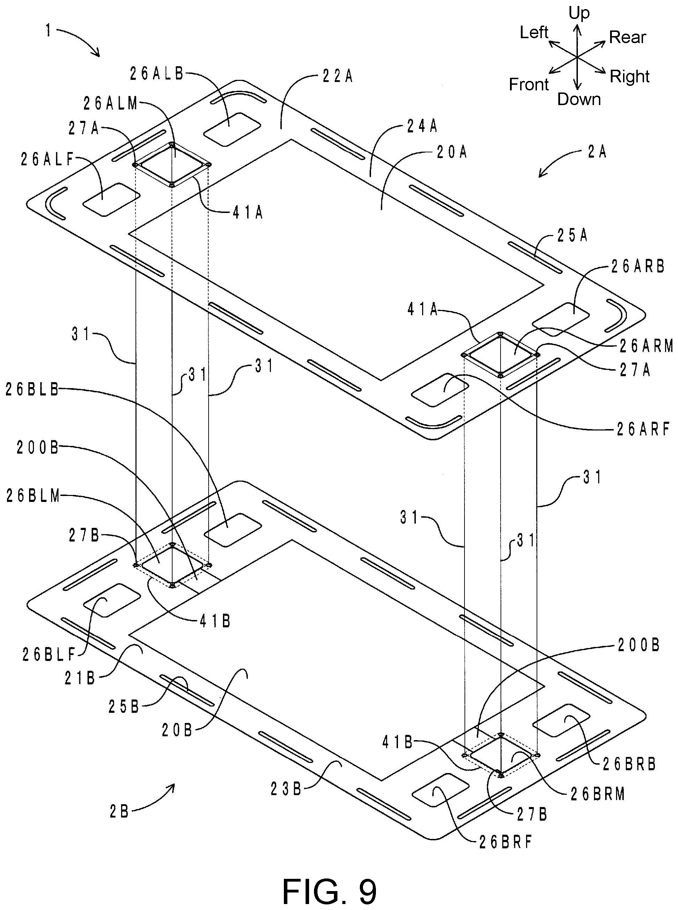

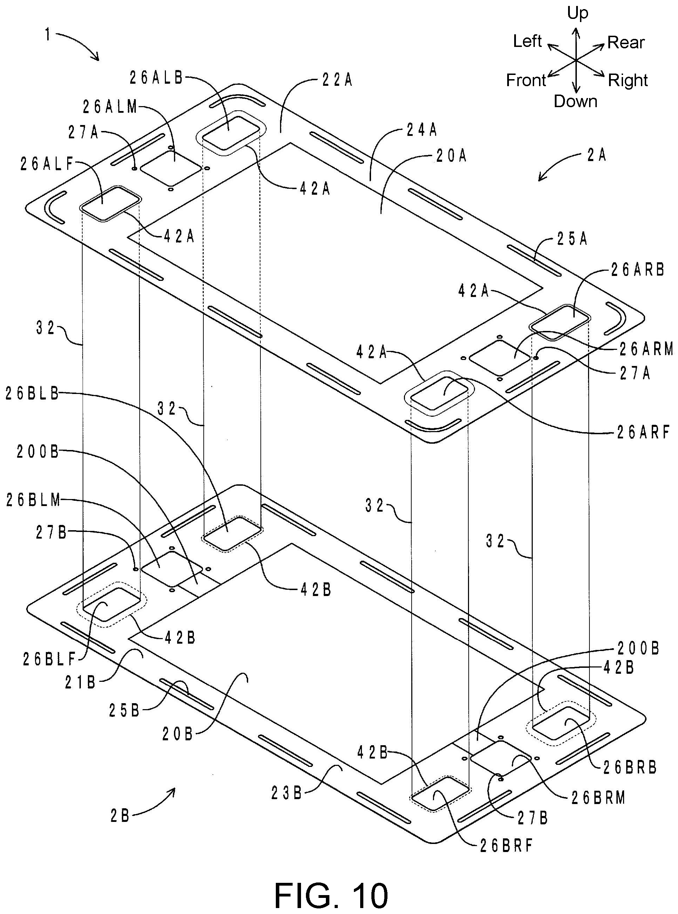

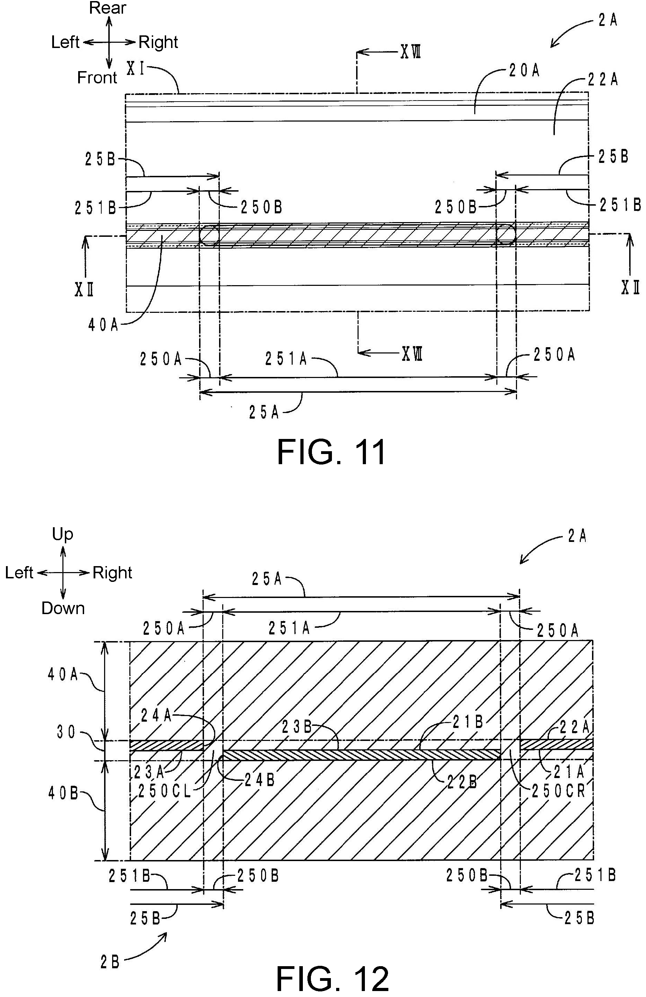

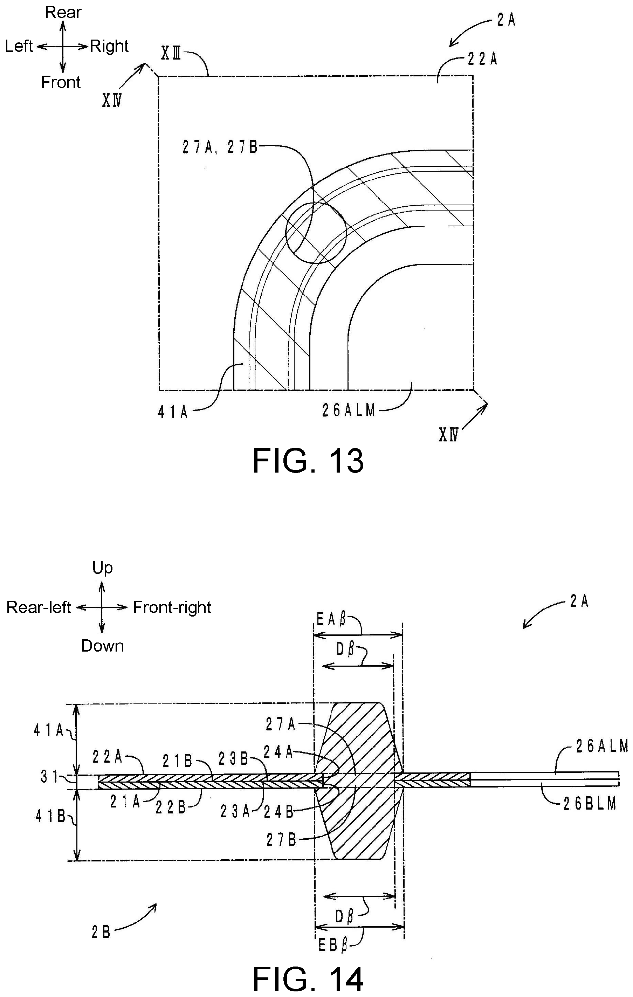

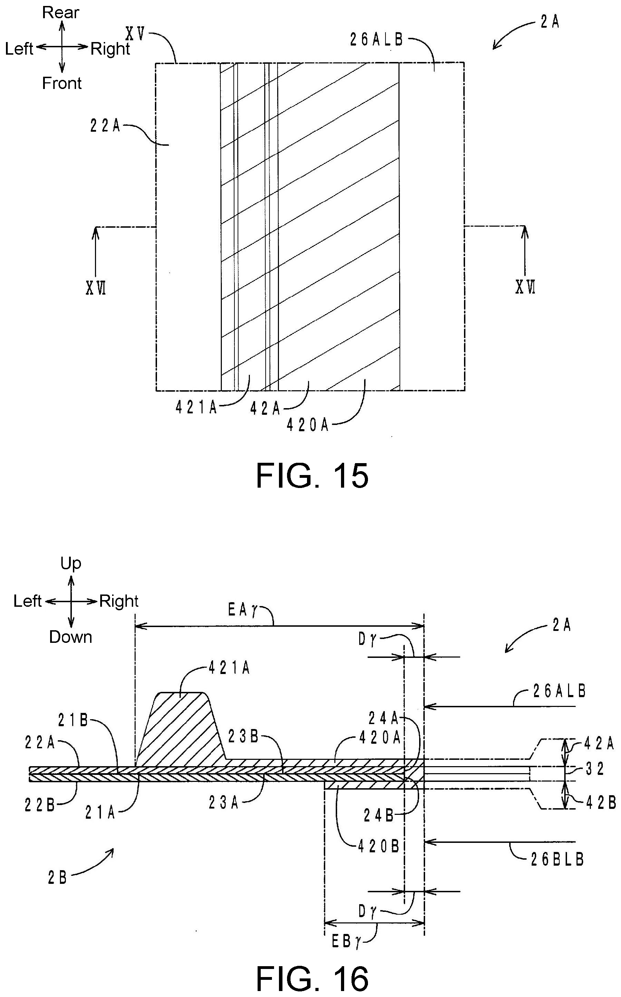

Next, a configuration of the bipolar plate of the present embodiment will be described. FIG. 2 shows a top view of the bipolar plate (a top view of a first separator of the bipolar plate). FIG. 3 shows a bottom view of the first separator. FIG. 4 shows a top view of a second separator of the bipolar plate. FIG. 5 shows a bottom view of the bipolar plate (a bottom view of the second separator). FIG. 6 shows a top view of the first separator alone. FIG. 7 shows a top view of the second separator alone. FIG. 8 shows an exploded perspective view of the first separator and the second separator connected via a slit connecting portion. FIG. 9 shows an exploded perspective view of the first separator and the second separator connected via spot hole connecting portions. FIG. 10 shows an exploded perspective view of the first separator and the second separator connected via manifold connecting portions. FIG. 11 shows an enlarged view within a frame XI of FIG. 2. FIG. 12 shows a cross-sectional view in a XII-XII direction of FIG. 11. FIG. 13 shows an enlarged view within a frame XIII of FIG. 2. FIG. 14 shows a cross-sectional view in a XIV-XIV direction of FIG. 13. FIG. 15 shows an enlarged view within a frame XV of FIG. 2. FIG. 16 shows a cross-sectional view in a XVI-XVI direction of FIG. 15.

FIG. 2 is a view seen from a direction of an arrow YII in FIG. 1. FIG. 3 is a view seen from a direction of an arrow YIII in FIG. 1. FIG. 4 is a view seen from a direction of an arrow YIV in FIG. 1. FIG. 5 is a view seen from a direction of an arrow YV in FIG. 1. Regarding the orientation in the figures, FIG. 3 and FIG. 5 are opposite in a front-rear direction with respect to FIG. 2 and FIG. 4.

In FIG. 12, FIG. 14, and FIG. 16, the vertical direction thickness of each member is shown in an exaggerated manner. In FIG. 11, a first slit 25A (solid line) and a second slit 25B (dotted line) are shown through a first slit gasket 40A. In FIG. 13, a first spot hole 27A (solid line) and a second spot hole 27B (solid line) are shown through a first spot hole gasket 41A.

Regarding the reference signs in the figures, the first separator 2A and the second separator 2B have reference signs (numeric portions and alphabetic portions) that correspond to each other. Specifically, among the corresponding portions (portions having corresponding arrangements and configurations) of the first separator 2A and the second separator 2B, the numeric portions of the reference signs are identical. The alphabetic portions of the reference signs differ (the first separator 2A is labeled with "A" and the second separator 2B is labeled with "B").

As shown in FIG. 1 to FIG. 16, the bipolar plate 1 includes a first separator 2A, a second separator 2B, connecting portions (a slit connecting portion 30, eight spot hole connecting portions 31, and four manifold connecting portions 32), and gaskets (a first slit gasket 40A, a second slit gasket 40B, two first spot hole gaskets 41A, two second spot hole gaskets 41B, four first manifold gaskets 42A, and four second manifold gaskets 42B).

### (First Separator 2A)

The first separator 2A is an anode (fuel electrode) side separator. As shown in FIG. 2, FIG. 3, and FIG. 6, the first separator 2A is made of metal and is in a rectangular thin plate shape. The first separator 2A includes a first concave-convex portion 20A, a lower surface (stacking direction inner surface) 21A, an upper surface (stacking direction outer surface) 22A, a first opposing surface 23A, a first non-opposing surface 24A, multiple first slits 25A, six first manifolds 26ALF, 26ALM, 26ALB, 26ARF, 26ARM, 26ARB, and eight first spot holes 27A.

As viewed from the vertical direction (in a plan view), the first concave-convex portion 20A is provided at the center of the first separator 2A. The first concave-convex portion 20A is in a rectangular shape. The first concave-convex portion 20A includes multiple rib-shaped protrusions and multiple groove-shaped recesses. The multiple protrusions and the multiple recesses are alternately provided. The first opposing surface 23A is provided on the lower surface 21A. The lower surface 21A is included in the concept of a "first cooling surface" of the present disclosure. The first opposing surface 23A is opposed to a second opposing surface 23B of the second separator 2B (to be described later) in the vertical direction.

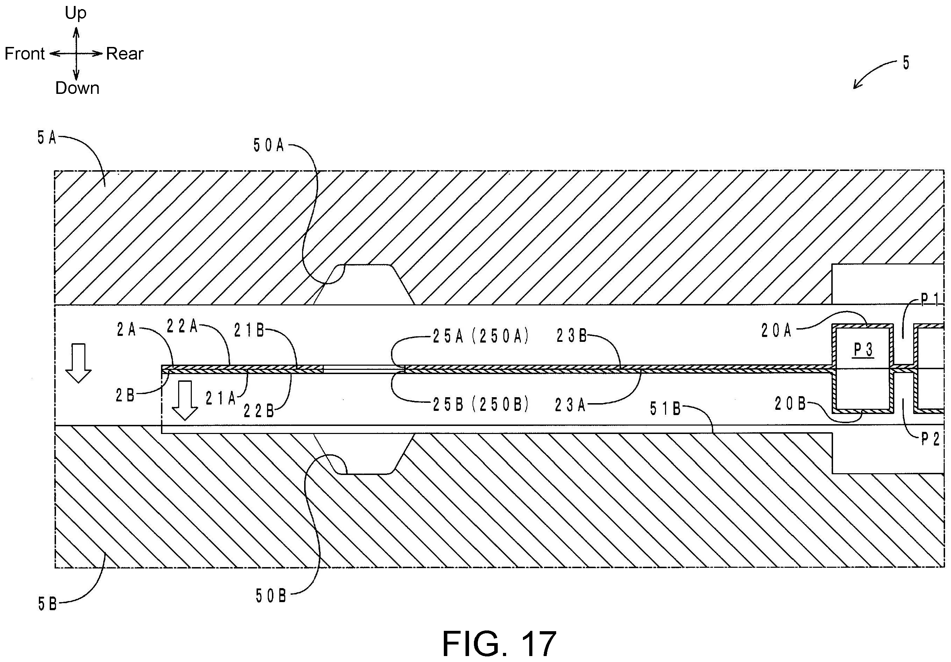

The upper surface 22A faces away from the lower surface 21A. The upper surface 22A is included in the concept of a "first gas surface" of the present disclosure. A first gas flow path P1 (see FIG. 17 to FIG. 19 (to be described later)) is defined between a portion of the upper surface 22A corresponding to the first concave-convex portion 20A and a portion of the power generating portion 8 shown in FIG. 1 overlapping with the first concave-convex portion 20A. A fuel gas flows through the first gas flow path P1. The fuel gas is included in the concept of a "hydrogen-containing gas" of the present disclosure.

As shown in FIG. 12, FIG. 14, and FIG. 16, the first non-opposing surface 24A is a surface of the outer surface of the first separator 2A (including an inner circumferential surface of the first slit 25A (to be described later), inner circumferential surfaces of the first manifolds 26ALF, 26ALM, 26ALB, 26ARF, 26ARM, and 26ARB, and an inner circumferential surface of the first spot hole 27A) other than the first opposing surface 23A. The first non-opposing surface 24A is not opposed to the second opposing surface 23B of the second separator 2B (to be described later) in the vertical direction.

The multiple first slits 25A are each included in the concept of a "first through hole" of the present disclosure. As shown in FIG. 2 to FIG. 3 and FIG. 8 to FIG. 12, the first slit 25A extends through the first separator 2A in the vertical direction. The first slit 25A is in an elongated hole shape as viewed from the vertical direction. The multiple first slits 25A are continuously provided along a rectangular outer edge of the first separator 2A at predetermined intervals.

As shown in FIG. 11 to FIG. 12, the first slit 25A includes two first overlapping portions 250A and a first non-overlapping portion 251A. The two first overlapping portions 250A are provided at both ends of the first slit 25A in the longitudinal direction. As viewed from the vertical direction, the first overlapping portion 250A overlaps with a second overlapping portion 250B of the second slit 25B (to be described later). The first non-overlapping portion 251A is provided between the two first overlapping portions 250A. As viewed from the vertical direction, the first non-overlapping portion 251A does not overlap with the second overlapping portion 250B of the second slit 25B (to be described later). The first non-overlapping portion 251A is covered from below by an upper surface 21B (second opposing surface 23B) of the second separator 2B (to be described later).

As shown in FIG. 2 to FIG. 3 and FIG. 8 to FIG. 10, the six (multiple) first manifolds 26ALF, 26ALM, 26ALB, 26ARF, 26ARM, and 26ARB each extend through the first separator 2A in the vertical direction. Among the six first manifolds 26ALF, 26ALM, 26ALB, 26ARF, 26ARM, and 26ARB, three first manifolds 26ALF, 26ALM, 26ALB are provided on the left side of the first concave-convex portion 20A. The three first manifolds 26ALF, 26ALM, and 26ALB are provided in a sequence of the first manifold 26ALF, the first manifold 26ALM, and the first manifold 26ALB from a front side toward a rear side.

Similarly, the remaining three first manifolds 26ARF, 26ARM, and 26ARB are provided on the right side of the first concave-convex portion 20A. The three first manifolds 26ARF, 26ARM, and 26ARB are provided in a sequence of the first manifold 26ARF, the first manifold 26ARM, and the first manifold 26ARB from the front side toward the rear side.

Among the six first manifolds 26ALF, 26ALM, 26ALB, 26ARF, 26ARM, and 26ARB, the four rectangular first manifolds 26ALF, 26ALB, 26ARF, and 26ARB at four corners (front-left, rear-left, front-right, and rear-right) of the first concave-convex portion 20A are each included in the concept of a "first through hole" of the present disclosure.

The eight (multiple) first spot holes 27A are each included in the concept of the "first through hole" of the present disclosure. As shown in FIG. 2 to FIG. 3 and FIG. 13 to FIG. 14, the eight first spot holes 27A each extend through the first separator 2A in the vertical direction. The eight first spot holes 27A are provided at four corners of each of the two first manifolds 26ALM, 26ARM at the center in the front-rear direction among the six first manifolds 26ALF, 26ALM, 26ALB, 26ARF, 26ARM, and 26ARB.

### (Second Separator 2B)

The second separator 2B is a cathode (air electrode) side separator. The second separator 2B is stacked on the lower side (one side in the stacking direction) of the first separator 2A. The second separator 2B is disposed vertically symmetrical to the first separator 2A. A structural difference between the second separator 2B and the first separator 2A lies in that, as viewed from the vertical direction, the second slit 25B is provided offset with respect to the first slit 25A. Another difference lies in that the second separator 2B includes two relay concave-convex portions 200B.

As shown in FIG. 4, FIG. 5, and FIG. 7, the second separator 2B is made of metal and is in a rectangular thin plate shape. The second separator 2B includes a second concave-convex portion 20B, an upper surface (stacking direction inner surface) 21B, a lower surface (stacking direction outer surface) 22B, a second opposing surface 23B, a second non-opposing surface 24B, multiple second slits 25B, six second manifolds 26BLF, 26BLM, 26BLB, 26BRF, 26BRM, and 26BRB, and eight second spot holes 27B.

As viewed from the vertical direction, the second concave-convex portion 20B is provided at the center of the second separator 2B. The second concave-convex portion 20B is in a rectangular shape. The second concave-convex portion 20B includes multiple rib-shaped protrusions and multiple groove-shaped recesses. The multiple protrusions and the multiple recesses are alternately provided. The second concave-convex portion 20B is disposed on the lower side of the first concave-convex portion 20A. As viewed from the vertical direction, two relay concave-convex portions 200B are provided on both left and right sides of the second concave-convex portion 20B. The relay concave-convex portion 200B includes multiple rib-shaped protrusions and multiple groove-shaped recesses. The multiple protrusions and the multiple recesses are alternately provided.

A cooling flow path P3 is defined between a portion of the upper surface 21B corresponding to the second concave-convex portion 20B and a portion of the lower surface 21A of the first separator 2A corresponding to the first concave-convex portion 20A. Similarly, a relay flow path (not shown) is defined between a portion of the upper surface 21B corresponding to the relay concave-convex portion 200B and a portion of the lower surface 21A of the first separator 2A corresponding to the relay concave-convex portion 200B.

The second opposing surface 23B is provided on the upper surface 21B. The upper surface 21B is included in the concept of a "second cooling surface" of the present disclosure. The second opposing surface 23B is opposed to the first opposing surface 23A of the first separator 2A described above in the vertical direction.

The lower surface 22B faces away from the upper surface 21B. The lower surface 22B is included in the concept of a "second gas surface" of the present disclosure. A second gas flow path P2 (see FIG. 17 to FIG. 19 (to be described later)) is defined between a portion of the lower surface 22B corresponding to the second concave-convex portion 20B and a portion of the power generating portion 8 shown in FIG. 1 overlapping with the second concave-convex portion 20B. Air flows through the second gas flow path P2. Air is included in the concept of an "oxygen-containing gas" of the present disclosure.

As shown in FIG. 12, FIG. 14, and FIG. 16, the second non-opposing surface 24B is a surface of the outer surface of the second separator 2B (including an inner circumferential surface of the second slit 25B (to be described later), inner circumferential surfaces of the second manifolds 26BLF, 26BLM, 26BLB, 26BRF, 26BRM, and 26BRB, and an inner circumferential surface of the second spot hole 27B) other than the second opposing surface 23B. The second non-opposing surface 24B is not opposed to the first opposing surface 23A of the first separator 2A in the vertical direction.

The multiple second slits 25B are each included in the concept of a "second through hole" of the present disclosure. As shown in FIG. 4 to FIG. 5 and FIG. 8 to FIG. 12, the second slit 25B extends through the second separator 2B in the vertical direction. The second slit 25B is in an elongated hole shape as viewed from the vertical direction. The multiple second slits 25B are continuously provided along a rectangular outer edge of the second separator 2B at predetermined intervals.

As shown in FIG. 11 to FIG. 12, the second slit 25B includes two second overlapping portions 250B and a second non-overlapping portion 251B. The two second overlapping portions 250B are provided at both ends of the second slit 25B in the longitudinal direction. As viewed from the vertical direction, the second overlapping portion 250B overlaps with the first overlapping portion 250A of the first slit 25A. The second non-overlapping portion 251B is provided between the two second overlapping portions 250B. As viewed from the vertical direction, the second non-overlapping portion 251B does not overlap with the first overlapping portion 250A of the first slit 25A. The second non-overlapping portion 251B is covered from above by the lower surface 21A (first opposing surface 23A) of the first separator 2A.

As shown in FIG. 4 to FIG. 5 and FIG. 8 to FIG. 10, six (multiple) second manifolds 26BLF, 26BLM, 26BLB, 26BRF, 26BRM, and 26BRB each extend through the second separator 2B in the vertical direction. The six second manifolds 26BLF, 26BLM, 26BLB, 26BRF, 26BRM, and 26BRB connect to the lower side of the six first manifolds 26ALF, 26ALM, 26ALB, 26ARF, 26ARM, and 26ARB.

As viewed from the vertical direction, the first manifold 26ALF and the second manifold 26BLF completely overlap with each other. The same applies to the first manifold 26ALM and the second manifold 26BLM, the first manifold 26ALB and the second manifold 26BLB, the first manifold 26ARF and the second manifold 26BRF, the first manifold 26ARM and the second manifold 26BRM, and the first manifold 26ARB and the second manifold 26BRB. The four second manifolds 26BLF, 26BLB, 26BRF, and 26BRB are each included in the concept of the "second through hole" of the present disclosure.

The eight (multiple) second spot holes 27B are each included in the concept of the "second through hole" of the present disclosure. As shown in FIG. 4 to FIG. 5 and FIG. 13 to FIG. 14, the eight second spot holes 27B each extend through the second separator 2B in the vertical direction. The eight second spot holes 27B are provided at four corners of each of the two second manifolds 26BLM and 26BRM. As viewed from the vertical direction, the first spot holes 27A and the second spot holes 27B completely overlap with each other overall.

### (Slit Connecting Portion 30)

The slit connecting portion 30 is included in the concept of the "connecting portion" of the present disclosure. The slit connecting portion 30 is made of an elastomer. As shown in FIG. 3 to FIG. 4, FIG. 8, and FIG. 12, the slit connecting portion 30 fills the first slit 25A and the second slit 25B. As shown in FIG. 12, the slit connecting portion 30 is disposed straddling the first slit 25A and the second slit 25B. The first separator 2A and the second separator 2B are integrated via the slit connecting portion 30.

Focusing on any one first slit 25A, as viewed from the vertical direction, the slit connecting portion 30 is disposed via the first slit 25A and a pair of second slits 25B on both sides of the first slit 25A in the longitudinal direction. Similarly, focusing on any one second slit 25B, as viewed from the vertical direction, the slit connecting portion 30 is disposed via the second slit 25B and a pair of first slits 25A on both sides of the second slit 25B in the longitudinal direction. In this manner, the slit connecting portion 30 is disposed in a zigzag pattern via the multiple first slits 25A and the multiple second slits 25B, as if stitching the first slits 25A and the second slits 25B together.

The slit connecting portion 30 connects surfaces, among any surface of the first separator 2A and any surface of the second separator 2B, that are not opposed to each other. Specifically, the slit connecting portion 30 connects the inner circumferential surface of the first slit 25A (included in the first non-opposing surface 24A) and the inner circumferential surface of the second slit 25B (included in the second non-opposing surface 24B). In addition, the slit connecting portion 30 connects the first opposing surface 23A and the inner circumferential surface of the second slit 25B. In addition, the slit connecting portion 30 connects the inner circumferential surface of the first slit 25A and the second opposing surface 23B.

As shown in FIG. 1 and FIG. 17 to FIG. 19 (to be described later), a first gas flow path P1 is defined between the first separator 2A and the power generating portion 8 on the upper side. Similarly, a second gas flow path P2 is defined between the second separator 2B and the power generating portion 8 on the lower side. In addition, a cooling flow path P3 through which a coolant flows is defined between the first separator 2A and the second separator 2B. As shown in FIG. 3 and FIG. 4, as viewed from the vertical direction, the slit connecting portion 30 is in an endless annular shape (rectangular frame shape) surrounding the first concave-convex portion 20A and the second concave-convex portion 20B (the first gas flow path P1, the second gas flow path P2, and the cooling flow path P3).

### (Spot Hole Connecting Portion 31)

The spot hole connecting portion 31 is included in the concept of the "connecting portion" of the present disclosure. The spot hole connecting portion 31 is made of an elastomer. As shown in FIG. 3 to FIG. 4, FIG. 9, and FIG. 14, the spot hole connecting portion 31 is disposed in each of the eight "first spot holes 27A and second spot holes 27B connecting in the vertical direction." That is, a total of eight spot hole connecting portions 31 are disposed. The first separator 2A and the second separator 2B are integrated via the eight spot hole connecting portions 31.

The configurations and arrangements of the eight spot hole connecting portions 31 are the same as each other. In the following, as a representative, the spot hole connecting portion 31 disposed in the first spot hole 27A and the second spot hole 27B at the left rear corner of the first manifold 26ALM and the second manifold 26BLM (corresponding to the frame XIII in FIG. 2 to FIG. 7 and FIG. 13) will be described.

As shown in FIG. 14, the spot hole connecting portion 31 is disposed straddling the first spot hole 27A and the second spot hole 27B. The spot hole connecting portion 31 fills the first spot hole 27A and the second spot hole 27B.

The spot hole connecting portion 31 connects surfaces, among any surface of the first separator 2A and any surface of the second separator 2B, that are not opposed to each other. Specifically, the spot hole connecting portion 31 connects the inner circumferential surface of the first spot hole 27A (included in the first non-opposing surface 24A) and the inner circumferential surface of the second spot hole 27B (included in the second non-opposing surface 24B).

### (Manifold Connecting Portion 32)

The manifold connecting portion 32 is included in the concept of the "connecting portion" of the present disclosure. The manifold connecting portion 32 is made of an elastomer. As shown in FIG. 3 to FIG. 4, FIG. 10, and FIG. 16, the manifold connecting portion 32 is disposed in each of "the first manifold 26ALF and the second manifold 26BLF," "the first manifold 26ALB and the second manifold 26BLB," "the first manifold 26ARF and the second manifold 26BRF," and "the first manifold 26ARB and the second manifold 26BRB." That is, a total of four manifold connecting portions 32 are disposed. The first separator 2A and the second separator 2B are integrated via the four manifold connecting portions 32.

The configurations and arrangements of the four manifold connecting portions 32 are the same as each other. In the following, as a representative, the manifold connecting portion 32 disposed in "the first manifold 26ALB and the second manifold 26BLB" (corresponding to the frame XV in FIG. 2 to FIG. 7 and FIG. 15) will be described.

As shown in FIG. 16, the manifold connecting portion 32 is disposed straddling the first manifold 26ALB and the second manifold 26BLB. The manifold connecting portion 32 fills the first manifold 26ALB and the second manifold 26BLB.

The manifold connecting portion 32 connects surfaces, among any surface of the first separator 2A and any surface of the second separator 2B, that are not opposed to each other. Specifically, the manifold connecting portion 32 connects the inner circumferential surface of the first manifold 26ALB (included in the first non-opposing surface 24A) and the inner circumferential surface of the second manifold 26BLB (included in the second non-opposing surface 24B). As viewed from the vertical direction, the manifold connecting portion 32 is in an endless annular shape (rectangular frame shape) surrounding the first manifold 26ALB and the second manifold 26BLB.

### (First Slit Gasket 40A)

The first slit gasket 40A is included in the concept of the "gasket" of the present disclosure. The first slit gasket 40A is made of an elastomer. As shown in FIG. 12, the first slit gasket 40A protrudes upward (stacking direction outer side) from the upper surface 22A of the first separator 2A. The first slit gasket 40A is integrally connected to the slit connecting portion 30. The first slit gasket 40A is disposed above the slit connecting portion 30.

As shown in FIG. 2, as viewed from the vertical direction, the first slit gasket 40A is in an endless annular shape (rectangular frame shape) surrounding the first concave-convex portion 20A (the first gas flow path P1, the second gas flow path P2, and the cooling flow path P3).

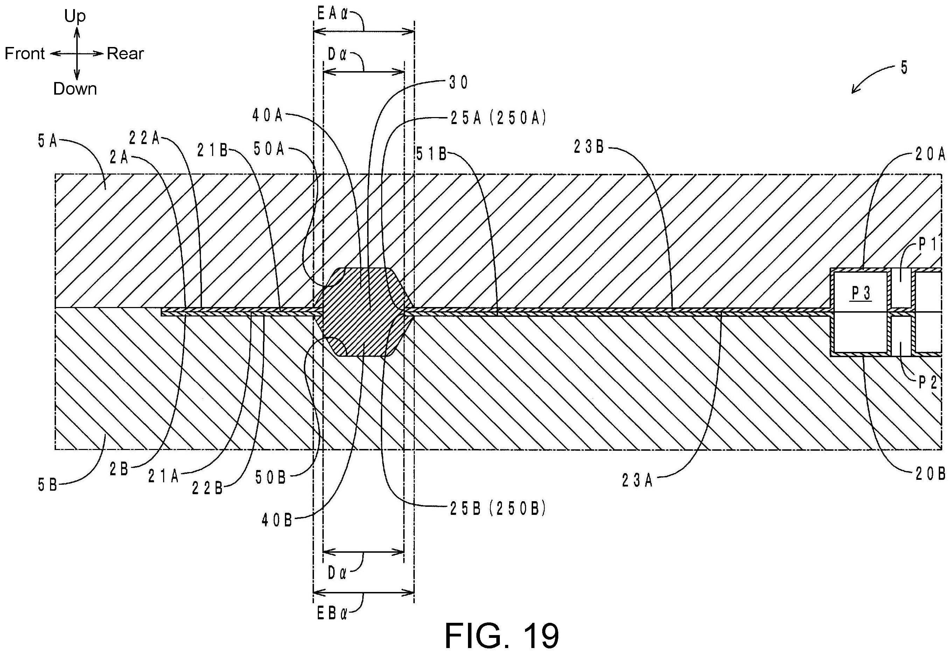

A direction orthogonal to the extending direction of the first slit gasket 40A is defined as a short direction. As shown in FIG. 19 (to be described later), a short direction width EAα of the first slit gasket 40A is greater than a short direction width Dα of the slit connecting portion 30.

### (Second Slit Gasket 40B)

The second slit gasket 40B is included in the concept of the "gasket" of the present disclosure. The second slit gasket 40B is made of an elastomer. As shown in FIG. 12, the second slit gasket 40B protrudes downward (stacking direction outer side) from the lower surface 22B of the second separator 2B. The second slit gasket 40B is integrally connected to the slit connecting portion 30. The second slit gasket 40B is disposed below the slit connecting portion 30.

As shown in FIG. 5, as viewed from the vertical direction, the second slit gasket 40B is in an endless annular shape (rectangular frame shape) surrounding the second concave-convex portion 20B (the first gas flow path P1, the second gas flow path P2, and the cooling flow path P3).

A direction orthogonal to the extending direction of the second slit gasket 40B is defined as a short direction. As shown in FIG. 19 (to be described later), a short direction width EBα of the second slit gasket 40B is greater than the short direction width Dα of the slit connecting portion 30.

### (First Spot Hole Gasket 41A)

The first spot hole gasket 41A is included in the concept of the "gasket" of the present disclosure. The first spot hole gasket 41A is made of an elastomer. As shown in FIG. 2, FIG. 9, and FIG. 13 to FIG. 14, the first spot hole gasket 41A is disposed around each of the first manifolds 26ALM and 26ARM. That is, a total of two first spot hole gaskets 41A are disposed.

The configurations and arrangements of the two first spot hole gaskets 41A are the same as each other. Hereinafter, as a representative, the first spot hole gasket 41A disposed around the first manifold 26ALM (corresponding to the frame XIII in FIG. 2 to FIG. 7 and FIG. 13) will be described.

As shown in FIG. 14, the first spot hole gasket 41A protrudes upward from the upper surface 22A of the first separator 2A. The first spot hole gasket 41A is integrally connected to the spot hole connecting portion 31. The first spot hole gasket 41A is disposed above the spot hole connecting portion 31.

As shown in FIG. 2, as viewed from the vertical direction, the first spot hole gasket 41A is in an endless annular shape (rectangular frame shape) surrounding the first manifold 26ALM. A direction orthogonal to the extending direction of the first spot hole gasket 41A is defined as a short direction. As shown in FIG. 14, a short direction width EAβ of the first spot hole gasket 41A is greater than a short direction width Dβ of the spot hole connecting portion 31.

### (Second Spot Hole Gasket 41B)

The second spot hole gasket 41B is included in the concept of the "gasket" of the present disclosure. The second spot hole gasket 41B is made of an elastomer. As shown in FIG. 5, FIG. 9, and FIG. 13 to FIG. 14, the second spot hole gasket 41B is disposed around each of the second manifolds 26BLM and 26BRM. That is, a total of two second spot hole gaskets 41B are disposed.

The configurations and arrangements of the two second spot hole gaskets 41B are the same as each other. Hereinafter, as a representative, the second spot hole gasket 41B disposed around the second manifold 26BLM (corresponding to the frame XIII in FIG. 2 to FIG. 7 and FIG. 13) will be described.

As shown in FIG. 14, the second spot hole gasket 41B protrudes downward from the lower surface 22B of the second separator 2B. The second spot hole gasket 41B is integrally connected to the spot hole connecting portion 31. The second spot hole gasket 41B is disposed below the spot hole connecting portion 31.

As shown in FIG. 5, as viewed from the vertical direction, the second spot hole gasket 41B is in an endless annular shape (rectangular frame shape) surrounding the second manifold 26BLM. A direction orthogonal to the extending direction of the second spot hole gasket 41B is defined as a short direction. As shown in FIG. 14, a short direction width EBβ of the second spot hole gasket 41B is greater than the short direction width Dβ of the spot hole connecting portion 31.

### (First Manifold Gasket 42A)

The first manifold gasket 42A is included in the concept of the "gasket" of the present disclosure. The first manifold gasket 42A is made of an elastomer. As shown in FIG. 2, FIG. 10, and FIG. 15 to FIG. 16, the first manifold gasket 42A is disposed around each of the first manifolds 26ALF, 26ALB, 26ARF, and 26ARB. That is, a total of four first manifold gaskets 42A are disposed.

The arrangements of the four first manifold gaskets 42A are the same as each other. Among the four first manifold gaskets 42A, the configurations of the two first manifold gaskets 42A disposed around each of the first manifolds 26ALF and 26ARB are the same as each other. Among the four first manifold gaskets 42A, the configurations of the two first manifold gaskets 42A disposed around each of the first manifolds 26ALB and 26ARF are the same as each other. Hereinafter, as a representative, the first manifold gasket 42A disposed around the first manifold 26ALB (corresponding to the frame XV in FIG. 2 to FIG. 7 and FIG. 15) will be described.

As shown in FIG. 16, the first manifold gasket 42A protrudes upward (stacking direction outer side) from the upper surface 22A of the first separator 2A. The first manifold gasket 42A is integrally connected to the manifold connecting portion 32. The first manifold gasket 42A is disposed above the manifold connecting portion 32.

As shown in FIG. 2, as viewed from the vertical direction, the first manifold gasket 42A is in an endless annular shape (rectangular frame shape) surrounding the first manifold 26ALB. A direction orthogonal to the extending direction of the first manifold gasket 42A is defined as a short direction. As shown in FIG. 16, a short direction width EAγ of the first manifold gasket 42A is greater than a short direction width Dγ of the manifold connecting portion 32.

As shown in FIG. 16, the first manifold gasket 42A includes a planar portion 420A and a protruding portion 421A. The planar portion 420A is connected to the manifold connecting portion 32. The protruding portion 421A is connected to the outer side of the planar portion 420A (outer side with respect to the first manifold 26ALB). The protruding portion 421A protrudes upward with respect to the planar portion 420A.

As shown in FIG. 2, the configuration of the first manifold gasket 42A around the first manifold 26ARF is the same as the configuration of the first manifold gasket 42A around the first manifold 26ALB described above.

In addition, as shown in FIG. 2, in contrast to the configuration of the first manifold gasket 42A around the first manifold 26ALB described above, the two first manifold gaskets 42A around each of the first manifold 26ALF and the first manifold 26ARB include only the planar portion 420A.

### (Second Manifold Gasket 42B)

The second manifold gasket 42B is included in the concept of the "gasket" of the present disclosure. The second manifold gasket 42B is made of an elastomer. As shown in FIG. 5, FIG. 10, and FIG. 15 to FIG. 16, the second manifold gasket 42B is disposed around each of the second manifolds 26BLF, 26BLB, 26BRF, and 26BRB. That is, a total of four second manifold gaskets 42B are disposed.

The arrangements of the four second manifold gaskets 42B are the same as each other. Among the four second manifold gaskets 42B, the configurations of the two second manifold gaskets 42B disposed around each of the second manifolds 26BLF and 26BRB are the same as each other. Among the four second manifold gaskets 42B, the configurations of the two second manifold gaskets 42B disposed around each of the second manifolds 26BLB and 26BRF are the same as each other. Hereinafter, as a representative, the second manifold gasket 42B disposed around the second manifold 26BLB (corresponding to the frame XV in FIG. 2 to FIG. 7 and FIG. 15) will be described.

As shown in FIG. 16, the second manifold gasket 42B protrudes downward (stacking direction outer side) from the lower surface 22B of the second separator 2B. The second manifold gasket 42B is integrally connected to the manifold connecting portion 32. The second manifold gasket 42B is disposed below the manifold connecting portion 32.

As shown in FIG. 5, as viewed from the vertical direction, the second manifold gasket 42B is in an endless annular shape (rectangular frame shape) surrounding the second manifold 26BLB. A direction orthogonal to the extending direction of the second manifold gasket 42B is defined as a short direction. As shown in FIG. 16, a short direction width EBγ of the second manifold gasket 42B is greater than the short direction width Dγ of the manifold connecting portion 32.

As shown in FIG. 16, the second manifold gasket 42B includes a planar portion 420B. The planar portion 420B is connected to the manifold connecting portion 32. As shown in FIG. 5, the configuration of the second manifold gasket 42B around the second manifold 26BRF is the same as the configuration of the second manifold gasket 42B around the second manifold 26BLB described above.

In addition, as shown in FIG. 5, in contrast to the configuration of the second manifold gasket 42B around the second manifold 26BLB described above, the two second manifold gaskets 42B around each of the second manifold 26BLF and the second manifold 26BRB include a planar portion 420B and a protruding portion 421B. The protruding portion 421B has the same configuration as the protruding portion 421A shown in FIG. 16. The protruding portion 421B is connected to the outer side of the planar portion 420B (outer side with respect to the second manifolds 26BLF and 26BRB). The protruding portion 421B protrudes upward with respect to the planar portion 420B.

### [Method for Producing Bipolar Plate]

Next, a method for producing a bipolar plate according to the present embodiment will be described. The method for producing the bipolar plate according to the present embodiment includes an injection process and a vulcanization process (crosslinking process).

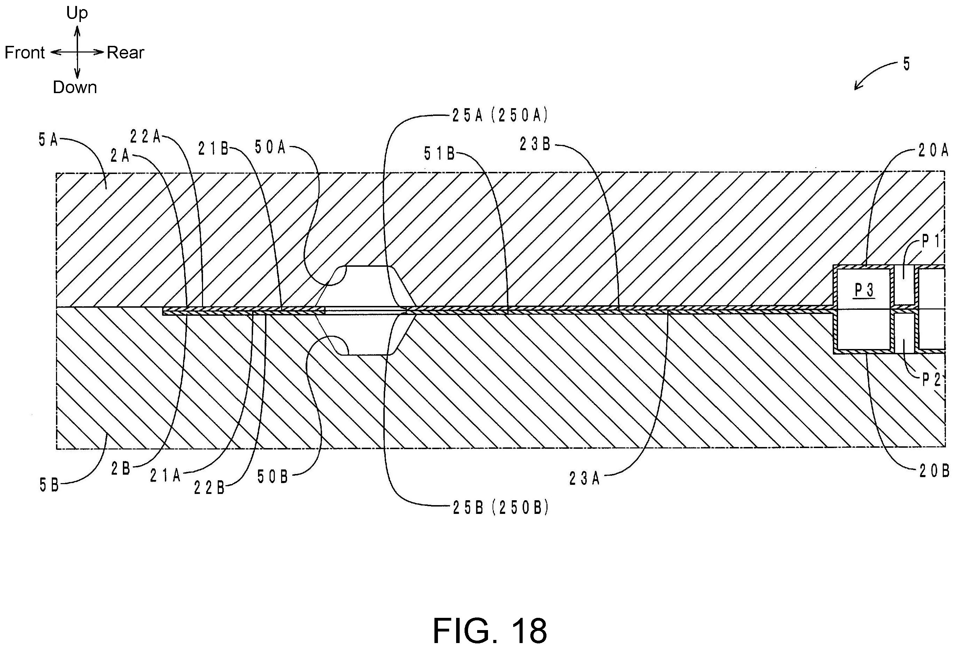

FIG. 17 shows a partial cross-sectional view in the vertical direction of a mold in a mold-open state used in producing the bipolar plate according to the present embodiment. FIG. 18 shows a partial cross-sectional view in the vertical direction of the mold in a mold-clamped state (at the beginning of the injection process). FIG. 19 shows a partial cross-sectional view in the vertical direction of the mold in the mold-clamped state (at the end of the vulcanization process). The portion of the bipolar plate 1 shown in FIG. 17 to FIG. 19 corresponds to a XVII-XVII cross-section of FIG. 11.

As shown in FIG. 17, a mold 5 includes a first mold (movable mold) 5A and a second mold (fixed mold) 5B. The mold 5 is included in the concept of a "molding mold" of the present disclosure. The first mold 5A is separable from and contactable with the second mold 5B from above. A first gasket molding cavity 50A is recessed in a lower surface of the first mold 5A. A second gasket molding cavity 50B and a separator accommodating cavity 51B are recessed in an upper surface of the second mold 5B. The second gasket molding cavity 50B is recessed in a bottom surface of the separator accommodating cavity 51B. The first gasket molding cavity 50A and the second gasket molding cavity 50B are included in the concept of a "gasket molding cavity" of the present disclosure.

Six manifold insertion protrusions (not shown) protrude from the bottom surface of the separator accommodating cavity 51B. The positions of the six manifold insertion protrusions correspond to the positions of the six first manifolds 26ALF, 26ALM, 26ALB, 26ARF, 26ARM, and 26ARB shown in FIG. 2 and the six second manifolds 26BLF, 26BLM, 26BLB, 26BRF, 26BRM, and 26BRB shown in FIG. 5. The six manifold insertion protrusions are inserted into the six first manifolds 26ALF, 26ALM, 26ALB, 26ARF, 26ARM, and 26ARB and the six second manifolds 26BLF, 26BLM, 26BLB, 26BRF, and 26BRM.

A gap for molding the manifold connecting portion 32 is defined between the manifold insertion protrusions described above and the inner circumferential surfaces of the four first manifolds 26ALF, 26ALB, 26ARF, and 26ARB and the four second manifolds 26BLF, 26BLB, 26BRF, and 26BRB shown in FIG. 3 and FIG. 4.

As shown in FIG. 17 to FIG. 19, the first gasket molding cavity 50A and the second gasket molding cavity 50B are opposed to each other in the vertical direction with the separator accommodating cavity 51B provided therebetween. The shape and arrangement of the first gasket molding cavity 50A correspond to the shape and arrangement of the gaskets (the first slit gasket 40A, the two first spot hole gaskets 41A, and the four first manifold gaskets 42A) to be molded on the first separator 2A. Similarly, the shape and arrangement of the second gasket molding cavity 50B correspond to the shape and arrangement of the gaskets (the second slit gasket 40B, the two second spot hole gaskets 41B, and the four second manifold gaskets 42B) to be molded on the second separator 2B.

### (Injection Process)

In this process, first, as shown in FIG. 17, the first separator 2A and the second separator 2B in a stacked state are disposed in the separator accommodating cavity 51B of the second mold 5B of the mold 5 in a mold-open state. In the stacked state, the first through holes of the first separator 2A (the multiple first slits 25A, the four first manifolds 26ALF, 26ALB, 26ARF, and 26ARB, and the eight first spot holes 27A) and the second through holes of the second separator 2B (the multiple second slits 25B, the four second manifolds 26BLF, 26BLB, 26BRF, and 26BRB, and the eight second spot holes 27B) are in communication with each other.

An adhesive (not shown) is applied in advance to the first separator 2A and the second separator 2B. Specifically, among the outer surfaces of the first separator 2A (including the inner circumferential surface of the first slit 25A, the inner circumferential surfaces of the first manifolds 26ALF, 26ALM, 26ALB, 26ARF, 26ARM, and 26ARB, and the inner circumferential surface of the first spot hole 27A) and the outer surfaces of the second separator 2B (including the inner circumferential surface of the second slit 25B, the inner circumferential surfaces of the second manifolds 26BLF, 26BLM, 26BLB, 26BRF, 26BRM, and 26BRB, and the inner circumferential surface of the second spot hole 27B), an adhesive (not shown) is applied in advance to the portions where the connecting portions (the slit connecting portion 30, the eight spot hole connecting portions 31, and the four manifold connecting portions 32) and the gaskets (the first slit gasket 40A, the second slit gasket 40B, the two first spot hole gaskets 41A, the two second spot hole gaskets 41B, the four first manifold gaskets 42A, and the four second manifold gaskets 42B) are disposed.

Next, as shown in FIG. 18, the first mold 5A is pressed against the second mold 5B with a predetermined mold clamping force. That is, mold clamping is performed. By the mold clamping, the first gasket molding cavity 50A and the second gasket molding cavity 50B are in communication via the first through holes of the first separator 2A and the second through holes of the second separator 2B. Then, a raw material (raw material for the gaskets and the connecting portions) is injected and filled into the first gasket molding cavity 50A, the second gasket molding cavity 50B, the first through holes, and the second through holes.

### (Vulcanization Process)

In this process, as shown in FIG. 19, the mold 5 in the mold-clamped state is heated at a predetermined temperature for a predetermined time to cure the raw material. That is, the gaskets (the first slit gasket 40A, the second slit gasket 40B, the two first spot hole gaskets 41A, the two second spot hole gaskets 41B, the four first manifold gaskets 42A, and the four second manifold gaskets 42B) are molded. In addition, the connecting portions (the slit connecting portion 30, the eight spot hole connecting portions 31, and the four manifold connecting portions 32) are molded.

As described above, the adhesive is applied in advance to the first separator 2A and the second separator 2B. Therefore, simultaneously with the molding, the gaskets and the connecting portions are joined to the first separator 2A and the second separator 2B.

In this manner, in the method for producing the bipolar plate of the present embodiment, the joining work between the first separator 2A and the second separator 2B and the fabrication work of the gaskets are performed in parallel.

### [Operational Effects]

Next, the operational effects of the bipolar plate and the method for producing the bipolar plate of the present embodiment will be described. As shown in FIG. 12, the slit connecting portion 30 connects the inner circumferential surface of the first slit 25A (included in the first non-opposing surface 24A) and the inner circumferential surface of the second slit 25B (included in the second non-opposing surface 24B). In addition, the slit connecting portion 30 connects the first opposing surface 23A and the inner circumferential surface of the second slit 25B. In addition, the slit connecting portion 30 connects the inner circumferential surface of the first slit 25A and the second opposing surface 23B. That is, the slit connecting portion 30 connects surfaces, among any surface of the first separator 2A and any surface of the second separator 2B, that are not opposed to each other.

As shown in FIG. 14, the spot hole connecting portion 31 connects the inner circumferential surface of the first spot hole 27A (included in the first non-opposing surface 24A) and the inner circumferential surface of the second spot hole 27B (included in the second non-opposing surface 24B). That is, the spot hole connecting portion 31 connects surfaces, among any surface of the first separator 2A and any surface of the second separator 2B, that are not opposed to each other.

As shown in FIG. 16, the manifold connecting portion 32 connects the inner circumferential surface of the first manifold 26ALB (included in the first non-opposing surface 24A) and the inner circumferential surface of the second manifold 26BLB (included in the second non-opposing surface 24B). That is, the manifold connecting portion 32 connects surfaces, among any surface of the first separator 2A and any surface of the second separator 2B, that are not opposed to each other.

In this manner, the multiple connecting portions (the slit connecting portion 30, the spot hole connecting portion 31, and the manifold connecting portion 32) shown in FIG. 12, FIG. 14, and FIG. 16 each connect surfaces, among any surface of the first separator 2A and any surface of the second separator 2B, that are not opposed to each other. Therefore, with at least one connecting portion among the multiple connecting portions, the management burden for the pressing accuracy between the first separator 2A and the second separator 2B can be reduced. Accordingly, the joining work (combining work, integration work) between the first separator 2A and the second separator 2B is facilitated.

The multiple connecting portions shown in FIG. 12, FIG. 14, and FIG. 16 are each made of an elastomer and have elasticity (rubber elasticity). Therefore, even in the case where spring back occurs in the first separator 2A or the second separator 2B during joining, at least a part of the spring back can be absorbed by the elastic deformation of at least one connecting portion among the multiple connecting portions.

The multiple connecting portions shown in FIG. 12, FIG. 14, and FIG. 16 each connect surfaces of at least one combination among the combinations of "(A) the first non-opposing surface 24A and the second non-opposing surface 24B", "(B) the first opposing surface 23A and the second non-opposing surface 24B", and "(C) the first non-opposing surface 24A and the second opposing surface 23B", that is, surfaces of combinations other than "the first opposing surface 23A and the second opposing surface 23B". Therefore, the management burden for the pressing accuracy between the first separator 2A and the second separator 2B can be reduced. Accordingly, the joining work between the first separator 2A and the second separator 2B is facilitated.

As shown in FIG. 11 and FIG. 12, the first slit 25A and the second slit 25B partially overlap with each other via the first overlapping portion 250A and the second overlapping portion 250B as viewed from the vertical direction. The slit connecting portion 30 is disposed straddling the first slit 25A and the second slit 25B. Therefore, the slit connecting portion 30 can integrate the first separator 2A and the second separator 2B by utilizing the hole interior space of the first slit 25A and the hole interior space of the second slit 25B.

As shown in FIG. 13 and FIG. 14, the first spot hole 27A and the second spot hole 27B completely (entirely) overlap with each other as viewed from the vertical direction. The spot hole connecting portion 31 is disposed straddling the first spot hole 27A and the second spot hole 27B. Therefore, the spot hole connecting portion 31 can integrate the first separator 2A and the second separator 2B by utilizing the hole interior space of the first spot hole 27A and the hole interior space of the second spot hole 27B.

As shown in FIG. 15 and FIG. 16, the first manifold 26ALB and the second manifold 26BLB completely (entirely) overlap with each other as viewed from the vertical direction. The manifold connecting portion 32 is disposed straddling the first manifold 26ALB and the second manifold 26BLB. Therefore, the manifold connecting portion 32 can integrate the first separator 2A and the second separator 2B by utilizing the hole interior space of the first manifold 26ALB and the hole interior space of the second manifold 26BLB. The same applies to the first manifold 26ALF and the second manifold 26BLF, the first manifold 26ARF and the second manifold 26BRF, and the first manifold 26ARB and the second manifold 26BRB.

As shown in FIG. 11 and FIG. 12, the first slit 25A and the second slit 25B partially overlap with each other. Combined portions 250CL and 250CR of the first overlapping portion 250A and the second overlapping portion 250B pass through the first separator 2A and the second separator 2B in the vertical direction.

Focusing on the combined portion 250CL of the first overlapping portion 250A at the left end (one end in the longitudinal direction) of the first slit 25A in FIG. 12 and the second overlapping portion 250B at the right end (other end in the longitudinal direction) of the second slit 25B on the left side, the first non-overlapping portion 251A extends to the right side (other side in the longitudinal direction) with the combined portion 250CL as a starting point. On the other hand, the second non-overlapping portion 251B extends to the left side (one side in the longitudinal direction). In this manner, the first non-overlapping portion 251A and the second non-overlapping portion 251B extend in directions that differ from each other. Therefore, the slit connecting portion 30 can be extended in the left-right direction (surface direction of the bipolar plate 1; a direction orthogonal to the stacking direction) along the first non-overlapping portion 251A and the second non-overlapping portion 251B.

As shown in FIG. 12, any one first slit 25A includes a pair of left and right first overlapping portions 250A. A pair of left and right second slits 25B connect to the lower side of the first slit 25A. The first overlapping portion 250A at the left end of the first slit 25A communicates with the second overlapping portion 250B at the right end of the second slit 25B on the left side. The first overlapping portion 250A at the right end of the first slit 25A communicates with the second overlapping portion 250B at the left end of the second slit 25B on the right side. In this manner, the multiple first overlapping portions 250A of the first slit 25A each communicate with a different second slit 25B. The slit connecting portion 30 is disposed via the first slit 25A and the multiple second slits 25B. Therefore, as shown in FIG. 8, the first separator 2A and the second separator 2B can be joined as if being stitched together.

Similarly, the multiple second overlapping portions 250B of any one second slit 25B each communicate with a different first slit 25A. The slit connecting portion 30 is disposed via the second slit 25B and the multiple first slits 25A. Therefore, as shown in FIG. 8, the second separator 2B and the first separator 2A can be joined as if being stitched together.

As shown in FIG. 12, the slit connecting portion 30 fills the first slit 25A and the second slit 25B. Therefore, the volume of the material of the slit connecting portion 30 can be increased compared to the case where the slit connecting portion 30 does not fill the first slit 25A and the second slit 25B. In addition, the slit connecting portion 30 is joined over the entirety of the inner circumferential surfaces of the first slit 25A and the second slit 25B. Therefore, the first separator 2A and the second separator 2B can be firmly joined together.

As shown in FIG. 12, the first slit 25A and the second slit 25B connect to each other in the vertical direction without a gap. Therefore, the thickness of the bipolar plate 1 in the vertical direction can be reduced compared to the case where a gap is present between the first slit 25A and the second slit 25B and the material of the slit connecting portion 30 is interposed in the gap.

As shown in FIG. 14, the first spot hole 27A and the second spot hole 27B connect to each other in the vertical direction without a gap. Therefore, the thickness of the bipolar plate 1 in the vertical direction can be reduced compared to the case where a gap is present between the first spot hole 27A and the second spot hole 27B and the material of the spot hole connecting portion 31 is interposed in the gap.

As shown in FIG. 16, the first manifold 26ALB and the second manifold 26BLB connect to each other in the vertical direction without a gap. Therefore, the thickness of the bipolar plate 1 in the vertical direction can be reduced compared to the case where a gap is present between the first manifold 26ALB and the second manifold 26BLB and the material of the manifold connecting portion 32 is interposed in the gap. The same applies to the first manifold 26ALF and the second manifold 26BLF, the first manifold 26ARF and the second manifold 26BRF, and the first manifold 26ARB and the second manifold 26BRB.

As shown in FIG. 19, the first gas flow path P1, the second gas flow path P2, and the cooling flow path P3 are defined between the first concave-convex portion 20A of the first separator 2A and the second concave-convex portion 20B of the second separator 2B. As shown in FIG. 3, FIG. 4, and FIG. 8, the slit connecting portion 30 is in an endless annular shape surrounding the first concave-convex portion 20A and the second concave-convex portion 20B (that is, the first gas flow path P1, the second gas flow path P2, and the cooling flow path P3) as viewed from the vertical direction. Therefore, the first separator 2A and the second separator 2B can be joined via the slit connecting portion 30, and the first gas flow path P1, the second gas flow path P2, and the cooling flow path P3 can be sealed by the endless annular slit connecting portion 30. That is, the joining work between the first separator 2A and the second separator 2B, and the sealing work of the first gas flow path P1, the second gas flow path P2, and the cooling flow path P3 can be performed in parallel. Therefore, the production time of the bipolar plate 1 can be shortened and the number of production steps can be reduced compared to the case where the joining work and the sealing work are performed separately.

As shown in FIG. 3, FIG. 4, and FIG. 10, the manifold connecting portion 32 is in an endless annular shape surrounding the first manifold 26ALB and the second manifold 26BLB as viewed from the vertical direction. Therefore, the first separator 2A and the second separator 2B can be joined via the manifold connecting portion 32, and the first manifold 26ALB and the second manifold 26BLB (specifically, the gas flow path inside the manifolds) can be sealed by the endless annular manifold connecting portion 32. That is, the joining work between the first separator 2A and the second separator 2B, and the sealing work of the gas flow path inside the manifolds can be performed in parallel. Therefore, the production time of the bipolar plate 1 can be shortened and the number of production steps can be reduced compared to the case where the joining work and the sealing work are performed separately. The same applies to the first manifold 26ALF and the second manifold 26BLF, the first manifold 26ARF and the second manifold 26BRF, and the first manifold 26ARB and the second manifold 26BRB.

As shown in FIG. 12, the first slit gasket 40A and the second slit gasket 40B protrude from the slit connecting portion 30 (that is, from the upper surface 22A and the lower surface 22B) toward both sides in the vertical direction. The first slit gasket 40A and the second slit gasket 40B connect integrally to the slit connecting portion 30. Therefore, the first separator 2A and the second separator 2B can be joined via the slit connecting portion 30, and the first slit gasket 40A and the second slit gasket 40B can be fabricated from the slit connecting portion 30. That is, the joining work between the first separator 2A and the second separator 2B, and the fabrication work of the first slit gasket 40A and the second slit gasket 40B can be performed in parallel. Therefore, the production time of the bipolar plate 1 can be shortened and the number of production steps can be reduced compared to the case where the joining work and the fabrication work are performed separately.

As shown in FIG. 14, the first spot hole gasket 41A and the second spot hole gasket 41B protrude from the spot hole connecting portion 31 (that is, from the upper surface 22A and the lower surface 22B) toward both sides in the vertical direction. The first spot hole gasket 41A and the second spot hole gasket 41B connect integrally to the spot hole connecting portion 31. Therefore, the first separator 2A and the second separator 2B can be joined via the spot hole connecting portion 31, and the first spot hole gasket 41A and the second spot hole gasket 41B can be fabricated from the spot hole connecting portion 31. That is, the joining work between the first separator 2A and the second separator 2B, and the fabrication work of the first spot hole gasket 41A and the second spot hole gasket 41B can be performed in parallel. Therefore, the production time of the bipolar plate 1 can be shortened and the number of production steps can be reduced compared to the case where the joining work and the fabrication work are performed separately.

As shown in FIG. 16, the first manifold gasket 42A and the second manifold gasket 42B protrude from the manifold connecting portion 32 (that is, from the upper surface 22A and the lower surface 22B) toward both sides in the vertical direction. The first manifold gasket 42A and the second manifold gasket 42B connect integrally to the manifold connecting portion 32. Therefore, the first separator 2A and the second separator 2B can be joined via the manifold connecting portion 32, and the first manifold gasket 42A and the second manifold gasket 42B can be fabricated from the manifold connecting portion 32. That is, the joining work between the first separator 2A and the second separator 2B, and the fabrication work of the first manifold gasket 42A and the second manifold gasket 42B can be performed in parallel. Therefore, the production time of the bipolar plate 1 can be shortened and the number of production steps can be reduced compared to the case where the joining work and the fabrication work are performed separately.

As shown in FIG. 19, focusing on widths in the short direction (the front-rear direction; a direction orthogonal to the left-right direction (the extending direction of the first slit gasket 40A)), the short direction width EAα of the first slit gasket 40A is greater than the short direction width Dα of the slit connecting portion 30. Therefore, it is possible to suppress leakage of the fuel gas from the first gas flow path P1 to outside across the first slit gasket 40A. That is, the sealing performance of the first slit gasket 40A can be improved. In addition, since the relationship "short direction width EAα > short direction width Dα" is satisfied, it is possible to suppress entry of the first slit gasket 40A into the first slit 25A. Accordingly, it is possible to suppress separation of the first separator 2A and the second separator 2B.

Similarly, regarding the second slit gasket 40B, the relationship "short direction width EBα > short direction width Dα" is also satisfied. Therefore, the second slit gasket 40B has the same effects as the first slit gasket 40A.

As shown in FIG. 14, focusing on widths in the short direction (the right-front and left-rear direction; a direction orthogonal to the left-front and right-rear direction (the extending direction of the first spot hole gasket 41A)), the short direction width EAβ of the first spot hole gasket 41A is greater than the short direction width Dβ of the spot hole connecting portion 31. Therefore, the sealing performance of the first spot hole gasket 41A can be improved. In addition, since the relationship "short direction width EAβ > short direction width Dβ" is satisfied, it is possible to suppress entry of the first spot hole gasket 41A into the first spot hole 27A. Accordingly, it is possible to suppress separation of the first separator 2A and the second separator 2B.

Similarly, regarding the second spot hole gasket 41B, the relationship "short direction width EBβ > short direction width Dβ" is also satisfied. Therefore, the second spot hole gasket 41B has the same effects as the first spot hole gasket 41A.

As shown in FIG. 16, focusing on widths in the short direction (the left-right direction; a direction orthogonal to the front-rear direction (the extending direction of the first manifold gasket 42A)), the short direction width EAγ of the first manifold gasket 42A is greater than the short direction width Dγ of the manifold connecting portion 32. Therefore, the sealing performance of the first manifold gasket 42A can be improved. In addition, since the relationship "short direction width EAγ > short direction width Dγ" is satisfied, and the first manifold gasket 42A protrudes radially outward from the opening edge of the first manifold 26ALB, it is possible to suppress entry of the first manifold gasket 42A into the first manifold 26ALB. Accordingly, it is possible to suppress separation of the first separator 2A and the second separator 2B.

Similarly, regarding the second manifold gasket 42B, the relationship "short direction width EBγ > short direction width Dγ" is also satisfied. In addition, the second manifold gasket 42B protrudes radially outward from the opening edge of the second manifold 26BLB. Therefore, the second manifold gasket 42B has the same effects as the first manifold gasket 42A.

As shown in FIG. 12, focusing on the vertical cross-section of the bipolar plate 1 (the cross-section in the extending direction of the first slit 25A and the second slit 25B), the non-through hole portion of the second separator 2B (the portion overlapping with the first non-overlapping portion 251A as viewed from the vertical direction) is surrounded on all sides by the material (the material of the slit connecting portion 30 and the material of the second slit gasket 40B). Therefore, it is possible to suppress separation of the first separator 2A and the second separator 2B. The same applies to the non-through hole portion of the first separator 2A (the portion overlapping with the second non-overlapping portion 251B as viewed from the vertical direction).

According to the method for producing the bipolar plate 1 of the present embodiment shown in FIG. 17 to FIG. 19, as shown in FIG. 12, FIG. 14, and FIG. 16, the connecting portions (the slit connecting portion 30, the spot hole connecting portion 31, and the manifold connecting portion 32) are molded in the hole interior spaces of the first through holes (the first slit 25A, the first manifolds 26ALF, 26ALB, 26ARF, and 26ARB, and the first spot hole 27A) and the hole interior spaces of the second through holes (the second slit 25B, the second manifolds 26BLF, 26BLB, 26BRF, and 26BRB, and the second spot hole 27B). The first separator 2A and the second separator 2B can be integrated by the connecting portions.

As shown in FIG. 18 to FIG. 19, in the mold-clamped state, the first gasket molding cavity 50A and the second gasket molding cavity 50B are in communication with the first through holes and the second through holes. Therefore, by injecting the raw material (the raw material of the gaskets and the connecting portions) into the mold 5 and curing the raw material in the injection process, the gaskets (the first slit gasket 40A, the second slit gasket 40B, the first spot hole gasket 41A, the second spot hole gasket 41B, the first manifold gasket 42A, and the four second manifold gaskets 42B) can be molded together with the connecting portions. That is, the joining work between the first separator 2A and the second separator 2B and the fabrication work of the gaskets can be performed in parallel. Accordingly, the production time of the bipolar plate 1 can be shortened, and the number of production steps can be reduced compared to the case where the joining work and the fabrication work are performed separately.

### <Second Embodiment>

The difference between a bipolar plate and a method for producing the same of the present embodiment and the bipolar plate and the method for producing the same of the first embodiment lies in that a gasket formed separately from the connecting portion is disposed. Herein, only the difference will be described.

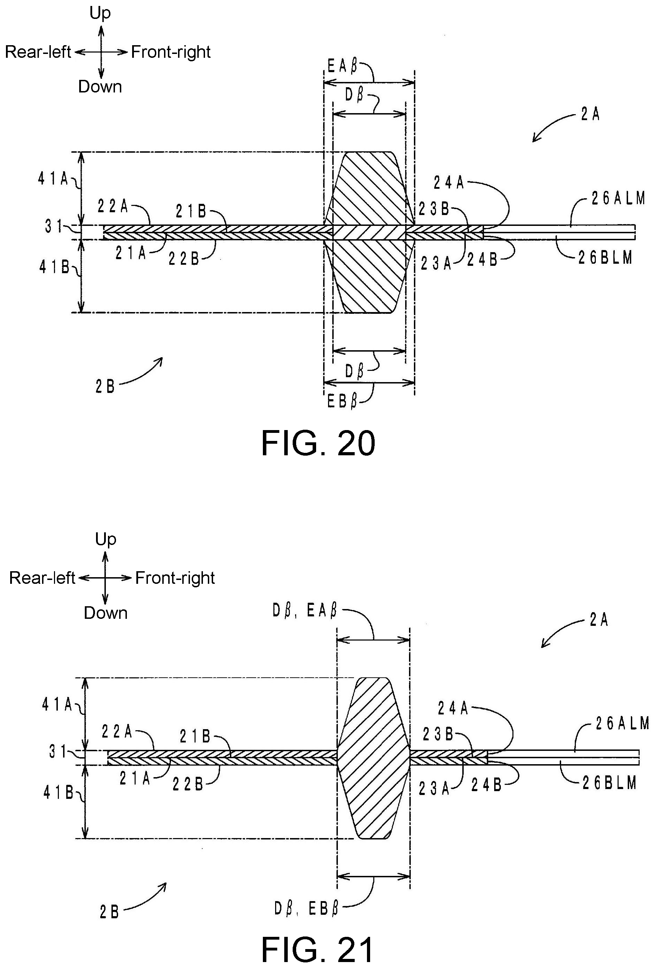

FIG. 20 shows a partial cross-sectional view in the vertical direction of the bipolar plate of the present embodiment. Portions corresponding to those in FIG. 14 are labeled with the same reference signs. As shown in FIG. 20, the first spot hole gasket 41A and the second spot hole gasket 41B are formed separately from the spot hole connecting portion 31, respectively. The first spot hole gasket 41A and the second spot hole gasket 41B are joined to the spot hole connecting portion 31, respectively.

The bipolar plate and the method for producing the same of the present embodiment and the bipolar plate and the method for producing the same of the first embodiment have similar effects with respect to portions having common configurations. According to the bipolar plate of the present embodiment, the connecting portion (the spot hole connecting portion 31) and the gaskets (the first spot hole gasket 41A and the second spot hole gasket 41B) are formed separately from each other. Therefore, the degree of design freedom (the degree of freedom in selecting the shape, size, material, etc.) of the connecting portion and the gaskets can be increased compared to the case where the connecting portion and the gaskets are integrally connected.

The first spot hole gasket 41A or the second spot hole gasket 41B may also be integrally connected with the spot hole connecting portion 31. In addition, the material of the first spot hole gasket 41A and the material of the second spot hole gasket 41B may be the same or may differ from each other.

### <Third Embodiment>

The difference between a bipolar plate and a method for producing the same of the present embodiment and the bipolar plate and the method for producing the same of the first embodiment lies in that the short direction width of the gasket and the short direction width of the connecting portion are the same. Herein, only the difference will be described.

FIG. 21 shows a partial cross-sectional view in the vertical direction of the bipolar plate of the present embodiment. Portions corresponding to those in FIG. 14 are labeled with the same reference signs. As shown in FIG. 21, a short direction width EAβ of the first spot hole gasket 41A is the same as a short direction width Dβ of the spot hole connecting portion 31. Similarly, a short direction width EBβ of the second spot hole gasket 41B is the same as the short direction width Dβ of the spot hole connecting portion 31.

The bipolar plate and the method for producing the same of the present embodiment and the bipolar plate and the method for producing the same of the first embodiment have similar effects with respect to portions having common configurations. As with the bipolar plate of the present embodiment, a relationship of "short direction width EAβ ≤ short direction width Dβ" or "short direction width EBβ ≤ short direction width Dβ" may also be satisfied.

### <Others>

The embodiments of the bipolar plate of the present disclosure have been described above. However, the embodiments are not particularly limited to the above forms. Implementation in various modified forms and improved forms that can be made by those skilled in the art is also possible.

The shape and the like (shape, size, position, number provided, etc.) of the first concave-convex portion 20A are not particularly limited. The same applies to the first slit 25A, the first manifolds 26ALF, 26ALM, 26ALB, 26ARF, 26ARM, and 26ARB, the first spot hole 27A, the second concave-convex portion 20B, the second slit 25B, the second manifolds 26BLF, 26BLM, 26BLB, 26BRF, 26BRM, and 26BRB, the second spot hole 27B, the gaskets (the first slit gasket 40A, the second slit gasket 40B, the two first spot hole gaskets 41A, the two second spot hole gaskets 41B, the four first manifold gaskets 42A, and the four second manifold gaskets 42B), and the connecting portions (the slit connecting portion 30, the eight spot hole connecting portions 31, and the four manifold connecting portions 32).

In the case where the gasket and the connecting portion are integral, the boundary between the gasket and the connecting portion is not particularly limited. For example, as viewed from a planar direction (a direction orthogonal to the stacking direction), a portion disposed outside (the stacking direction outer side) of the first separator 2A and the second separator 2B may be defined as the gasket, and the other portion (a portion disposed inside (the stacking direction inner side) of the first separator 2A and the second separator 2B) may be defined as the connecting portion.

The extending direction shape of the gasket shown in FIG. 2 and FIG. 5 may be a strip shape (a linear shape, a curved shape, a shape in which these shapes are appropriately combined, etc.), a lump shape (a circular shape, an elliptical shape, a droplet shape, a polygonal shape (a triangular shape, a quadrangular shape, a hexagonal shape, etc.), an indeterminate shape, etc.), or a frame shape (a circular frame shape, an elliptical frame shape, a polygonal frame shape). The short direction shape of the gasket shown in FIG. 14, FIG. 16, and FIG. 19 may be a rectangular shape, a trapezoidal shape, an arc shape, a V-shape, a C-shape, a U-shape, a shape in which these shapes are appropriately combined, etc.

The bipolar plate 1 may include first gaskets (the first slit gasket 40A, the first spot hole gasket 41A, and the first manifold gasket 42A) and second gaskets (the second slit gasket 40B, the second spot hole gasket 41B, and the second manifold gasket 42B). The bipolar plate 1 may include the first gaskets only. The bipolar plate 1 may include the second gaskets only. It is also possible that the bipolar plate 1 does not include the first gaskets and the second gaskets.

The extending direction of the first non-overlapping portion 251A and the second non-overlapping portion 251B starting from the combined portion 250CL shown in FIG. 12 is not particularly limited. The first non-overlapping portion 251A and the second non-overlapping portion 251B may extend in directions that differ from each other. For example, the first non-overlapping portion 251A and the second non-overlapping portion 251B may extend in directions opposite to each other by 180° (for example, forward and rearward, leftward and rightward). In addition, the first non-overlapping portion 251A and the second non-overlapping portion 251B may extend in directions that differ from each other by 90° (for example, forward and leftward, forward and rearward). Of course, the intersection angle (included angle) between the extending direction of the first non-overlapping portion 251A and the extending direction of the second non-overlapping portion 251B as viewed from the vertical direction is not particularly limited. The intersection angle may be, for example, 30°, 45°, 60°, 90°, 120°, 135°, 150°, 180°, etc. In addition, the first non-overlapping portion 251A and the second non-overlapping portion 251B may extend in the same direction as each other (for example, forward and forward, leftward and leftward).

The opening and closing direction of the mold 5 shown in FIG. 17 to FIG. 19 is not particularly limited. The opening and closing direction may be the vertical direction, the horizontal direction, or a direction intersecting the vertical direction and the horizontal direction. In the injection process, the first mold 5A may be a fixed mold and the second mold 5B may be a movable mold. Conversely, the first mold 5A may be a movable mold and the second mold 5B may be a fixed mold.

The material of the first separator 2A and the second separator 2B is not particularly limited. The material may be a resin, a metal, carbon, etc. that has conductivity and does not have corrosivity. Examples include stainless steel, titanium, copper, magnesium, aluminum, carbon, graphite, ceramics, conductive resin (a thermoplastic resin or a thermosetting resin containing carbon, graphite, polyacrylonitrile-based carbon fiber, etc.), etc.

The material of the connecting portion and the gasket is not particularly limited. The material is an elastomer that has insulating properties and elasticity after curing. The material has fluidity at the raw material stage (the stage before curing). In addition to a rubber component, the connecting portion and the gasket may contain a crosslinking agent, a co-crosslinking agent, a processing aid, a softening agent, a reinforcing material, etc. Suitable rubber components include VMQ (silicone rubber), silicone rubbers other than VMQ (such as PVMQ (phenylvinylmethyl silicone rubber) and FVMQ (fluorovinylmethyl silicone rubber)), EPDM (ethylene propylene diene rubber), FKM (fluororubber), etc. In the case where a liquid silicone rubber is used as the raw material, the type of the liquid silicone rubber is not particularly limited. The liquid silicone rubber may be a one-component type or a two-component type. The liquid silicone rubber may also be a room temperature curing type or a heat curing type.

In the case where the connecting portion and at least one of the first gasket and the second gasket are formed separately from each other, the material of the connecting portion and the material of the gasket (the first gasket and the second gasket) formed separately from the connecting portion may be the same or may differ from each other. In addition, the material of the first gasket and the material of the second gasket may be the same or may differ from each other.

The material of the mold 5 is not particularly limited. The material may be corrosion-resistant steel, carbon tool steel, alloy tool steel, high-speed tool steel, as-rolled steel, pre-hardened steel, hardened steel, hardened and tempered steel, age-hardened steel, etc.

### Reference Signs List

1: bipolar plate
2A: first separator, 20A: first concave-convex portion, 21A: lower surface (first cooling surface), 22A: upper surface (first gas surface), 23A: first opposing surface, 24A: first non-opposing surface, 25A: first slit (first through hole), 250A: first overlapping portion, 251A: first non-overlapping portion, 26ALF: first manifold (first through hole), 26ALM: first manifold, 26ALB: first manifold (first through hole), 26ARF: first manifold (first through hole), 26ARM: first manifold, 26ARB: first manifold (first through hole), 27A: first spot hole (first through hole)
2B: second separator, 20B: second concave-convex portion, 200B: relay concave-convex portion, 21B: upper surface (second cooling surface), 22B: lower surface (second gas surface), 23B: second opposing surface, 24B: second non-opposing surface, 25B: second slit (second through hole), 250B: second overlapping portion, 251B: second non-overlapping portion, 26BLF: second manifold (second through hole), 26BLM: second manifold, 26BLB: second manifold (second through hole), 26BRF: second manifold (second through hole), 26BRM: second manifold, 26BRB: second manifold (second through hole), 27B: second spot hole (second through hole), 250CL: combined portion, 250CR: combined portion
30: slit connecting portion (connecting portion), 31: spot hole connecting portion (connecting portion), 32: manifold connecting portion (connecting portion)
40A: first slit gasket (gasket), 41A: first spot hole gasket (gasket), 42A: first manifold gasket (gasket), 420A: planar portion, 421A: protruding portion
40B: second slit gasket (gasket), 41B: second spot hole gasket (gasket), 42B: second manifold gasket (gasket), 420B: planar portion, 421B: protruding portion
5: mold (molding mold), 5A: first mold, 50A: first gasket molding cavity (gasket molding cavity), 5B: second mold, 50B: second gasket molding cavity (gasket molding cavity), 51B: separator accommodating cavity
8: power generating portion, 80: membrane electrode assembly, 800: electrolyte membrane, 801: electrode, 81: gas diffusion layer
9: stack
P1: first gas flow path, P2: second gas flow path, P3: cooling flow path

## Claims

1. A bipolar plate for a fuel cell, comprising:
a first separator;
a second separator stacked on the first separator; and
a connecting portion made of an elastomer and connecting, among any surface of the first separator and any surface of the second separator, surfaces that are not opposed to each other.

2. The bipolar plate according to claim 1, wherein
taking a direction in which the first separator and the second separator are stacked as a stacking direction,
the first separator has a first through hole extending through the first separator in the stacking direction,
the second separator has a second through hole extending through the second separator in the stacking direction,
as viewed from the stacking direction, the first through hole and the second through hole overlap with each other entirely or partially,
the connecting portion is disposed straddling the first through hole and the second through hole, and
the first separator and the second separator are integrated via the connecting portion.

3. The bipolar plate according to claim 2, wherein
as viewed from the stacking direction, the first through hole has a first overlapping portion that overlaps with the second through hole, and a first non-overlapping portion that does not overlap with the second through hole,
as viewed from the stacking direction, the second through hole has a second overlapping portion that overlaps with the first through hole, and a second non-overlapping portion that does not overlap with the first through hole, and
the first non-overlapping portion and the second non-overlapping portion extend in directions that differ from each other.

4. The bipolar plate according to claim 3, wherein
the first through hole has a plurality of the first overlapping portions,
a plurality of the second through holes are provided,
the plurality of the first overlapping portions each communicate with a different one of the second through holes, and
the connecting portion is disposed via the first through hole and the plurality of the second through holes.

5. The bipolar plate according to claim 3, wherein
the second through hole has a plurality of the second overlapping portions,
a plurality of the first through holes are provided,
the plurality of the second overlapping portions each communicate with a different one of the first through holes, and
the connecting portion is disposed via the second through hole and the plurality of the first through holes.

6. The bipolar plate according to claim 2, wherein
the connecting portion fills at least one of the first through hole and the second through hole.

7. The bipolar plate according to claim 2, wherein
the first separator has a first opposing surface opposed to the second separator in the stacking direction, and a first non-opposing surface not opposed to the second separator in the stacking direction,
the second separator has a second opposing surface opposed to the first separator in the stacking direction, and a second non-opposing surface not opposed to the first separator in the stacking direction,
an inner circumferential surface of the first through hole is included in the first non-opposing surface, and
the connecting portion accommodated in the first through hole connects the inner circumferential surface of the first through hole and the second opposing surface.

8. The bipolar plate according to claim 2, wherein
the first separator has a first opposing surface opposed to the second separator in the stacking direction, and a first non-opposing surface not opposed to the second separator in the stacking direction,
the second separator has a second opposing surface opposed to the first separator in the stacking direction, and a second non-opposing surface not opposed to the first separator in the stacking direction,
an inner circumferential surface of the second through hole is included in the second non-opposing surface, and
the connecting portion accommodated in the second through hole connects the inner circumferential surface of the second through hole and the first opposing surface.

9. The bipolar plate according to claim 2, wherein
the first through hole and the second through hole connect to each other without a gap in the stacking direction.

10. The bipolar plate according to claim 1, wherein
taking a direction in which the first separator and the second separator are stacked as a stacking direction,
a cooling flow path through which a coolant flows is defined between the first separator and the second separator, and
as viewed from the stacking direction, the connecting portion is in an endless annular shape surrounding the cooling flow path.

11. The bipolar plate according to claim 1, wherein
taking a direction in which the first separator and the second separator are stacked as a stacking direction,
a cooling flow path through which a coolant flows is defined between the first separator and the second separator,
the first separator has a first cooling surface that is a surface on a cooling flow path side, and a first gas surface facing away from the first cooling surface,
the second separator has a second cooling surface that is a surface on the cooling flow path side, and a second gas surface facing away from the second cooling surface, and
the bipolar plate further comprises a gasket that protrudes toward a stacking direction outer side from at least one of the first gas surface and the second gas surface and connects integrally to the connecting portion.

12. The bipolar plate according to claim 1, wherein
taking a direction in which the first separator and the second separator are stacked as a stacking direction,
a cooling flow path through which a coolant flows is defined between the first separator and the second separator,
the first separator has a first cooling surface that is a surface on a cooling flow path side, and a first gas surface facing away from the first cooling surface,
the second separator has a second cooling surface that is a surface on the cooling flow path side, and a second gas surface facing away from the second cooling surface, and
the bipolar plate further comprises a gasket that protrudes toward a stacking direction outer side from at least one of the first gas surface and the second gas surface and is formed separately from the connecting portion.

13. The bipolar plate according to claim 11 or 12, wherein
the fuel cell comprises a power generating portion disposed on both outer sides of the first separator and the second separator in the stacking direction,
the gasket protrudes from the first gas surface and the second gas surface toward the both outer sides in the stacking direction,
a first gas flow path through which one of a hydrogen-containing gas and an oxygen-containing gas flows is defined between the first separator and the power generating portion,
a second gas flow path through which the other of the hydrogen-containing gas and the oxygen-containing gas flows is defined between the second separator and the power generating portion, and
as viewed from the stacking direction, the gasket is in an endless annular shape surrounding the first gas flow path and the second gas flow path.

14. The bipolar plate according to claim 13, wherein
taking a direction orthogonal to an extending direction of the gasket on the first gas surface and the second gas surface as a short direction,
the gasket has a short direction width greater than a short direction width of the connecting portion.

15. A method for producing a bipolar plate, which is a method for producing the bipolar plate according to claim 2, the method comprising:
disposing the first separator and the second separator into a molding mold such that, as viewed from the stacking direction, the first through hole and the second through hole overlap with each other entirely or partially; and
injecting a raw material of the connecting portion into the molding mold and curing the raw material to mold the connecting portion and integrate the first separator and the second separator via the connecting portion.

16. The method for producing a bipolar plate according to claim 15, wherein
the bipolar plate comprises a gasket that connects integrally with the connecting portion,
the raw material is a raw material of the connecting portion and the gasket,
the molding mold comprises a gasket molding cavity for molding the gasket,
in a mold-clamped state, the gasket molding cavity communicates with the first through hole and the second through hole, and
the method further comprises:
injecting the raw material into the molding mold and curing the raw material to mold the gasket together with the connecting portion.
